Europäisches Patentamt

European Patent Office

Office européen des brevets

(19)

(11) EP 0 919 673 A2

(12) EUROPÄISCHE PATENTANMELDUNG

(43) Veröffentlichungstag:
02.06.1999 Patentblatt 1999/22

(51) Int. Cl.⁶: E04B 1/62

(21) Anmeldenummer: 98120775.6

(22) Anmeldetag: 02.11.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 03.11.1997 DE 19748352

(71) Anmelder:
Hergenroeder, Karl Heinz
63263 Neu-Isenburg (DE)

(72) Erfinder:
Hergenroeder, Karl Heinz
63263 Neu-Isenburg (DE)

(54) **Verfahren und Schichtelemente zur thermischen und körperorientierten Beherrschung und Steuerung des Innenklimas**

(57) Grundgedanke der Erfindung ist, durch einmalige bauliche Verwendung von Schichtelementen verschiedenster Art in Gebäuden und Fahrzeugen ähnliche Bedingungen zu erreichen wie bei Idealwetter im Freien. Übliche Baustoffe, besonders solche aus massiven mineralischen Massen sind Wärmespeicher, welche gegensätzlich zum wärmeisolierenden Verhalten von Luft wirken. Deshalb müssen sich Menschen in kalten, warmen und heissen Regionen lebenslang mittels Zufuhr von Wärme oder Kühlung schützen.

Der einmalige Kostenaufwand für Schichtelemente und automatische Temperatursteuerung mittels vorbehandelter Luft mit geringstem Energieaufwand verbessert die Aufenthaltsbedingungen entscheidend, senkt den Energieverbrauch nachhaltig, entlastet den Organismus, bedeutet lebenslangen Verzicht auf erheblichen Anteil an Kleidung und sonstigen wärmenden/kühlenden Schutz in Gebäuden.

Die Patentanmeldung beruht auf Realitäten der Natur und verfolgt das Ziel, primär der menschlichen Gesundheit zu dienen und im erweiterten Sinn, gegenwärtige Zwänge abzubauen.

In zeitgemässer Zielsetzung erfolgt durch thermische Entlastung der Bausubstanz und der Raumluft das dringende Gebot entscheidender Energieeinsparung.

Fig 3a   Fig 3b   Fig 3c   Fig 3d   Fig 3e

Fig 3f   Fig 3g   Fig 3h   Fig 3j   Fig 3k

EP 0 919 673 A2

Fig 3l    Fig 3m    Fig 3n    Fig 3o

Fig 5

**Beschreibung**

Heizungen und andere Einrichtungen zur Regelung des Innenklimas in Gebäuden werden in grosser Vielfalt angeboten, sind jedoch primär zur Überwindung der physikalischen und physiologischen Belastungen aus der Bausubstanz ausgelegt. Von allen beteiligten Faktoren ist der Mensch wegen seiner auf 37°Cels. fixierten Körpertemperatur die einzige Konstante. Diese Ausgangslage wird als Orientierung unzureichend wahrgenommen und deshalb wird nicht folgerichtig gebaut. Mit ganz wenigen Ausnahmen dienen alle Gebäude dem Aufenthalt von Menschen und müssten deshalb unverzichtbar auf die Bedürfnisse des menschlichen Körpers ausgerichtet sein. Nach dieser Ausrichtung sucht man vergebens.

In ihrer Ausstattung auf gutes Innenklima einschliesslich Be- und Entlüftung, Luftqualität, minimierter thermischer Belastung aus der unmittelbar wirkenden Bausubstanz fehlt jegliche bau- und gerätetechnische Übereinstimmung zur optimalen Aufenthaltsqualität. Ganz besonders auffällig ist die Tatsache, dass die Aufenthaltsbedingungen schlechter werden, je kleiner die Räume sind. Daran ist die Fehlerhaftigkeit exakt zu erkennen.

Gegenüber Klimaschwankungen, deren Höchst- und Niedrigstwerte nicht mit der Wärmespeicherkapazität der Raumluft abzudecken sind, solange Wärmetransmission, Wärmestrahlung, Wärmeabsorption und Wärmespeicherkapazität der Raumumschliessungen in gegenwärtig massiver Weise Raumluft und anwesende Personen beeinflussen, fehlt ein ausreichend grosses Raumluftvolumen, bzw. ein angemessener Klimaausgleich, der wegen der grösseren Abstände und Luftvolumina in Grossräumen begrenzt gegeben ist.

Nach dem übergeordneten Erfindungsgedanken kann gutes Innenklima nur durch luftähnliches Verhalten der Raumumschliessungen zustandekommen, indem bei Verzicht auf grosse Räume die Bedingungen idealen Aussenklimas mittels neuartiger Schichtelemente mit hohem bis sehr hohem Luftanteil den gewünschten Klimaausgleich herbeiführen. Darunter ist zu verstehen, dass die thermischen Belastungen aus den Raumumschliessungen weitgehend aufgehoben werden.

Gelingt eine gute thermische Trennung Bausubstanz/Raumluft, kann das Innenklima in kleinen bis mittelgrossen Räumen mit angepasster Zuluft höherer und niedriger Temperaturen im Mehrfachregler des Luftausströmkörpers nach der Europäischen Patentanmeldung Nr. 0 743 494 A2 erfolgen. Dadurch wird sinnvoll möglich, nach persönlichem Empfinden durch steuerbare Laminarströmung eine Mitteltemperatur oder in mehreren Temperaturstufen Zuluft in einen Raum einzuleiten. Gesundheitlich vorteilhaft ist das Verfahren wegen seiner zahlreichen Varianten.

In allen Gebäuden ohne Wärmeschutz wird durch modernisierte Heizungen Energie eingespart, aber der Mensch bleibt Wärmetransmissionen, der Wärmeabsorption, und der Wärmestrahlung aus der Bausubstanz ausgesetzt. Das Innenklima kleiner bis mittelgrosser Räume unterliegt in jedem Fall allen physikalisch bedingten Belastungen. Ohne Entlastung dieser Gesetzmässigkeiten bleiben für den primär entscheidenden menschlichen Organismus alle Disharmonien der massiven Bausubstanz wirksam. Diesem beständig ablaufenden Prozess ist der ruhende oder nur geringfügig tätige Mensch wegen seiner auf +37° Cels. fixierten Körpertemperatur ausgesetzt. Tages- und Jahresabläufe bedingen die Korrektur der sich ständig ändernden Temperaturen innerhalb der Bausubstanz Die Raumlufttemperatur als Medium zwischen Bausubstanz und Mensch kann die physikalischen Gegensätze nicht ausgleichen, denn die Eigenart der Bausubstanz liegt in deren thermischem Masseverhalten gegenüber der höheren Körpertemperatur des Menschen. Jede Zufuhr von Wärme oder Kühlung wird dazu verschwendet, die Oberflächentemperatur der Raumumschliessungen in einem körperverträglichen Temperaturbereich zu halten. Verluste wegen des thermischen Negativverhaltens der Bausubstanz, einschliesslich der Wärmeabgabe anwesender Personen, von Geräten, der Beleuchtung und Fenstern, ob zur Erwärmung oder Kühlung ist nicht als Wärmebedarf von Menschen einzustufen, denn der Mensch beansprucht nicht mehr als eine Lufthülle im Temperaturbereich zwischen +18 und ca. +22° Celsius, ähnlich den Bedingungen in der Natur.

Diese enge Spanne liegt zugleich im idealen Bereich guter Verträglichkeit zum Wärmeisolationsverhalten der den Menschen umgebenden Raumluft. Innerhalb dieser Spanne kann die Raumluft aber auch soviel Überschusswärme aus dem menschlichen Körper aufnehmen, dass keine Belastungen zu seinem Nachteil auftreten. Aus dieser Konstellation Mensch/Raumluft wird die Sorgfalt ersichtlich, mit der das Innenklima zu behandeln ist.

Verständlich wird die Notwendigkeit, gleichbleibende und wechselnde Bedingungen im Tages- und Jahresablauf herbeizuführen. Durch positive Veränderungen der Bauweise wird erreicht, dass Luft als korrigierendes Medium zur alleinigen Bestimmung des Innenklimas wird. Wegen des körpergerechten Verhaltens kann nur der hohe Anteil von Luft im raumseitigen Bereich von Wänden und Decken das Innenklima nachhaltig und gezielt optimieren.

Nach einem weiteren übergeordneten Erfindungsgedanken eignen sich Tafeln, Platten und beliebig gestaltete Formkörper aus natürlich und künstlich geblähten Mineralien, wie Blähton, Blähglas, Blähschiefer, Vermiculite, Perlite, Aerogele und ähnliche Produkte nach Verkleben und Verfüllen zu luftdurchlässigen Schichtelementen. Zusätzliche Lufteinschlüsse vermindern in hervorragender Weise die thermischen Belastungen aus der Bausubstanz. Ziel ist, die raumseitigen Wand- und Deckenoberschichten derart zu gestalten dass sie kaum spürbare Wärmemengen aufnehmen, welche auf den menschlichen Körper negativ einwirken können. Die nach diesen Verfahren gestaltbare Tiefenwirkung der Raumluft kann je nach Klimazone und Nutzungsart verschiedenartiger Räume und durch zusätzliche Luftzwischenräume (4) Dampfdiffusionssperren (1) Wärmedämmschichten (2) auch solche aus streifen- punkt- und anderweitig verklebten, bzw. mit Druckknöpfen oder ähnlich gehaltenen Mehrfach-Wechsellagen aus hochglänzenden Reflexionsfolien mit Dämmstoffzwischenlagen (12) von der wärmespeicherfähigen Bausubstanz getrennt werden.

Die Zusammensetzung der Schichtelemente (3) wird durch die erstrebte Wirkungsweise vorgegeben, um einen bis zu 85-prozentigen Luftanteil zu erreichen. Die Verwendung sehr leichter und grobkörniger Blähmineralien lässt diesen sehr hohen Luftanteil zu und bewirkt damit einen kaum noch wahrnehmbaren Unterschied zwischen der Raumluft und den mit Schichtelementen verkleideten Wänden und Decken, ohne vollwertiger Dämmstoff zu sein. Für den menschlichen Körper gilt im Bezug auf das Wärmeverhalten eine nahezu vollständige thermische Neutralität, welche gleichzeitig durch Offenporigkeit einen Luftaustausch erlaubt oder durch Verschluss der wandseitigen, bzw. raumseitigen Oberflächen mit einem Gemisch verklebter fein- bis feinstkörnigen Blähmineralien und möglicher Beimischung textiler oder mineralischer Fasern, Korkmehl, Korkschrot und anderer geeigneter Beimischungen zustandekommt.

Schichtelemente erfüllen durch ihre Zusammensetzung, Stärke, Einformung von Lufteinschlüssen, Luftkanälen, ein-oder beidseitigen Oberflächenverschlüssen und Ausbildung wellenförmiger oder sphärischer wandseitiger Oberflächen alle Eigenschaften zur thermischen Steuerung der Raumluft durch Bildung wärmerer oder kühlerer Zuluft mittels exakt vorbestimmter Zufuhr, Wechsel und Ableitung von Luft.

Sie eignen sich als Wärmeüberträger zur Wärmespeicherung und Wärmeabgabe aus Wärmespeichermassen gleichermassen. Ihre ideale Vielfalt ergibt sich aus der vorbestimmten Zusammensetzung, Luftdurchlässigkeit und zielgerichteter Montage. Die Vielfältigkeit der Anwendungsmöglichkeiten gestattet jedwedes Wärmeangebot und beliebige Wärmeableitung und Wärmeabweisung. Schichtelemente werden grundsätzlich auf optimale Verwendung in den unterschiedlichsten Klimazonen hergestellt, um alle auftretenden Belastungen des Aussenklimas unter Einbeziehung von Wärmespeichermassen (19), Wärmereflexionsschichten (12), offenen bis geschlossenen Luftkanälen, bzw. Luftzwischenräumen (4), Dampfdiffusionssperren (1), Hitzeschilden (14) und deren Auswirkung auf das Innenklima gegen hohe und zu niedrige Temperaturen der Raumluft auszulegen.

Als Mittel zur Steuerung des Innenklimas eignen sich Schichtelemente besonders gut, um nutzbare Wärme und Kühlung aus dem Aussenklima zu verwerten. Die beabsichtigte Schutzfunktion kann zumindest im Rahmen wünschbarer Zufuhr von Wärme bzw. Kühlung mit den Luftbewegungen erfolgen. Wegen der thermischen Trennung der vorbelasteten Bausubstanz von der Raumluft sinkt der Energiebedarf für Heizung und Kühlung in Gebäuden auf sehr niedrige Werte. Sie können zum Teil aus dem Wechsel von Tag- und Nachttemperaturen, stellenweise mit Hilfe von kaltem oder warmem Wasser über Wärmepumpenbetrieb erzeut, gespeichert und nach Bedarf abgerufen werden. Thermisch hochwertige Speichermassen sind geeignet, die Energiebilanz zu entlasten. Speicherbehälter und Speichermassen werden sehr vorteilhaft mit Wärmedämmschichten (2) aus streifen- punkt- oder anderweitig dauerhaft verklebten, bzw. mit Druckknöpfem oder ähnlich gehaltenen Mehrfachwechselagen aus hochglänzenden Reflexionsfolien mit Dämmstoffzwischenlagen gegen Wärmeverluste geschützt Im Jahresmittel entsteht in wärmeren Gebieten der gemässigten Klimazonen schon ein Überangebot an Wärme in der Raumluft, welches zur Erwärmung von Brauchwasser herangezogen werden kann. Andererseits kann Grund- und Fliesswasser, aber auch in der Industrie, im Gewerbe und in Haushalten Leitungswasser zu Kühlzwecken dienen, soweit es später nicht als Trinkwasser oder zur Zubereitung von Speisen Verwendung findet. Die Ausbeute kann vielfach ausreichend ausfallen. Schichtelemente müssen nicht zwingend nur in Verbindung mit einer künstlichen Be- und Entlüftung verwendet werden. So kann beim Betrieb einer normalen Warmwasserheizung zumindest das Aussenmauerwerk und Decken damit verkleidet werden, wobei dann allerdings die Dampfdiffusionssperre (1) sorgfältig ausgelegt werden muss und Teile der an Aussenwände angebundenen Innenwände gleichartig auszustatten sind.

Kernbereiche eines Gebäudes, die nur unbedeutend vom Aussenklima abhängig sind, können beispielsweise nur mit einer Lage Schichtelemente den üblichen Verputz auf Wänden und Decken ersetzen. Sie sollten dann einen möglichst hohen eigenen Wärmedämmeffekt aufweisen, damit die thermische Trennung von Bausubstanz und Raumluft ausreichend spürbar wird. Eine Alternative ist eine schwache Wärmedämmschicht. Sie wird in Räumen verwendet, welche nicht für den Daueraufenthalt bestimmt sind. Einschränkungen dürfen nicht zur Auskühlung benachbarter Räume mit normalem Heiz- und Kühlbedarf führen. Gegenüber üblichen Wärmedämmungen mit gleichbleibend starken Wärmedämmschichten (2) zeigen diese Beispiele eine sinnvollere und wirkungsvollere Arbeitsweise. Vorteilhafterer Schutz gegen alle Wärmeverluste durch die Bausubstanz sind Wärmedämmschichten (2) auch solche aus streifenpunkt- und anderweitig dauerhaft verklebten, bzw. mit Druckknöpfen oder ähnlich gehaltenen Mehrfach-Wechsellagen aus hochglänzenden Reflexionsfolien mit Dämmstoffzwischenlagen (12).

Nach einem weiteren Erfindungsgedanken kann die Multiplikatorwirkung atmosphärischer Wärmevorgänge auf die Bausubstanz, wie Wärmeabstrahlung und Aufheizung derselben durch geeignete Abschirmung sehr wohl am Ort der Entstehung vermindert werden und ist daher sinnvoll. In gleicher Überlegung ist folgerichtig, die geringere, aber trotzdem ständig wirksame in der Bausubstanz gespeicherte Wärme gegen die Raumluft und anwesende Menschen abzuschirmen und an deren Stelle innerhalb von geschlossenen Räumen Aufenthaltsbedingungen herbeizuführen, die den optimalen Verhältnissen zwischen der Luft in der Atmosphäre und dem leicht bekleideten menschlichen Körper so nahe als möglich kommen.

Entgegen überlieferter und noch immer vertretener Lehrmeinung die Bausubstanz sei ein geeigneter Wärmespeicherkörper entzieht die Bausubstanz bei Raumlufttemperaturen unter +21 bis +22° Cels. dem menschlichen Körper ununterbrochen mehr Körperwärme, als dieser unter Normalbedingungen abgeben kann.

In die Eigenschaft eines Wärmespeichers ist auch die in der Bausubstanz enthaltene Feuchte zu rechnen. In üblichen Wärmeberechnungen werden nur Standardwerte als konstante Belastungen eingebracht, nicht aber Feuchtebelastungen, welche auf mangelhafte Be- und Entlüftung zurückzuführen sind. Auch wenn Feuchtebelastungen das Wärmeverhalten rechnerisch nicht stark belasten, tragen feuchte Wände und Decken zur Minderung der Wohn- und Aufenthaltsqualität bei. Wandfeuchte in den äusseren Gebäudeschichten regulieren sich in der Regel durch ständigen Luftwechsel. Erprobte Schutzmassnahmen wie Schindeln und Klinkervormauerwerk sind seit langer Zeit gewährte Bautechnik.

Indem Bedingungen durch regelmässige Be- und Entlüftung ähnliche Bedingungen eintreten wie in der Atmosphäre, vermindert sich der Bedarf an Kühlung und Wärme, ohne Feuchtigkeitsbelastungen. Wegen geringerer Wärmeabsorption durch die Bausubstanz kann die Raumlufttemperatur unbedenklich um bis zu 3° Cels. abgesenkt werden. Andererseits lassen sich Hauskleidung, Polsterungen, Wolldecken, und andere Hilfen zum Wärmeschutz einsparen. Anfälligkeiten gegenüber Krankheiten, z. B. Asthma werden rückläufig.

Wendet man aus diesem Wissen in Anlehnung an das Gross- und Kleinklima eine Mischung aus wärmespeicherfähigen und gut wärmedämmenden Zuschlägen in Schichtelementen an, kann die Erwärmung wie die Abkühlung weitgehend ausgeglichen werden. Über den Wärmepumpenbetrieb mit der technisch höchsten Wärmerückgewinnungsquote verbleibt nur noch ein minimaler Energieaufwand.

In erprobten Wärmespeichermassen lässt sich je nach Jahreszeit und Bedarf eine Grundversorgung sicherstellen. In Regionen mit starken Schwankungen der Tag- und Nachttemperaturen lohnt sich jede berechnete Investition. Sie zu nutzen gilt als Vorsorge gegen die Abnahme verfügbarer fossiler Brennstoffe.

Von besonderer Wichtigkeit ist die Trennung der Deckenkonstruktion von der Raumluft wegen des Auftriebs vorhandener und zugeführter Wärme. Ist die Bausubstanz ein besserer Wärmeleiter als Luft, absorbiert sie bis zum Erreichen gleicher Temperatur mit der Luft deren höhere Temperatur. Gegen diesen selbstverständlichen Vorgang wird trotz Wärmeschutzverordnungen unbekümmert verstossen. Für den Menschen ist die in Decken gespeicherte Wärme grundsätzlich nutzlos und bei hohen Raumlufttemperaturen sogar belastend. Solange Raumdecken aus Holzkonstruktionen bestanden, war die Wärmeaufnahme geringer und selbstverständlich auch erträglicher.

Verstärkt wird das negative Verhalten massiver Decken durch erhöhte Aufnahmefähigkeit von Wasserdampf, der wiederum die Wärmeleitfähigkeit erhöht. Es besteht aus diesen Vorgängen schon eine dringende Notwendigkeit zu wirkungsvoller Abschirmung und Trennung von Decken und Raumluft. Werden Decken mit sehr guten Wärmedämmschichten (2) besonders solchen aus streifenpunkt- oder anderweitig dauerhaft verklebten, bzw. mit Druckknöpfen oder ähnlich gehaltenen Mehrfach-Wechsellagen aus vorzugsweise geprägten Kunststoffschaumfolien und hochglänzenden dünnen und gelegeverstärkten Reflexionsfolien gegen die Raumluft abgeschirmt und darauf ultraleichte Schichtelemente montiert, kommt es nicht zur Kondenswasserbildung, ein verbesserter Wärmeschutz verhindert den ungebremsten Wärmeübergang in Massivdecken und es wird weiter Energie gespart.

Aus diesen Zusammenhängen wird die Zwangslüftung erforderlich und verständlich. Gleichzeitig wird die Gefahr beseitigt, den gefürchteten Taupunkt zu erreichen, denn Kondensation erfolgt nur auf kalten, kälteren und gut wärmeleitenden Oberflächen und Massen mit Wärmegefälle nach aussen.

Zusätzlich ergibt sich das Angebot, zumindest einen Teil der Abluft in Deckennähe abzusaugen und der Wärmerückgewinnung zuzuführen. Bei hoher Wärmebelastung kann mit Absaugung der Warmluft auf aufwendigere Einrichtungen verzichtet werden.

Dadurch kann in geschlossenen Räumen mit minimiertem Aufwand für Heizung, Kühlung, Lüftung und Luftfeuchtebestimmung während des Aufenthalts einer durchschnittlichen Zahl von Personen beispielsweise bei Aussentemperaturen zwischen +8° und +30° Cels. die Innen- Wand- und Deckenoberflächentemperatur auf einem Mittel zwischen +18 und +22° Cels. gehalten werden.

Die thermische Trennung kann durch die Stärke der Wärmedämmschichten (2), die Breite von Luftzwischenräumen (4) die Offenhaltung der wandnahen oder raumnahen Oberfläche der Schichtelemente, bzw. beider oder deren Verschluss, eine einheitliche oder schichtweise Zusammensetzung aus leichteren oder schwereren Blähmineralien und anderen geeigneten Zuschlägen das Luftvolumen und die Luftdurchlässigkeit sehr genau eine gezielt erstrebte Wirkung vorgeben. Damit wird die überaus grosse Spanne zwischen normalen Wänden und Decken bis in die Nähe normaler Dämmstoffe abgedeckt. Aus dieser Fülle von Möglichkeiten kann für einzelne Wand- oder Deckenteile, aber auch für Böden, bzw. Teilen davon, bzw. vermörtelten Luftausströmeinrichtungen, Einbau in oder zwischen Möbeln in Nischen, luftdurchlässigen oder luftdichten Heizwänden nach Hypokaustenverfahren (11) die Steuerung des Innenklimas nach beliebigen Wünschen und Erwartungen erfolgen.

In ähnlicher Absicht der Zusammenfassung von Heizung, Kühlung und Belüftung kann aus Deckenkonstruktionen wie Baldachinen, Deckenverkleidungen, offenen, geschlossenen, normalen ganz oder teilweise abgehängten Decken aus Schichtelementen steuerbar Luft nach Temperatur und Volumen an Räume abgegeben oder zusätzliche Wärmestrahlung erfolgen.

Vorteilhaft erweisen sich Schichtelemente für den Einbau in Feucht- und Nassräumen zum Zweck der grossflächigen Zufuhr grösserer Luftvolumina um anfallende Feuchte aufzunehmen und abzuleiten.Nach dem Prinzip der Europäischen Patentanmeldung Nr. 0 743 494 A2 wird die Bestimmung der Lufttemperatur und der Luftvolumina exakt nach Bedarf und Zeitspanne möglich und die umgebende Bausubstanz kann bei ausreichend bemessenem Luftwechsel sogar ohne eine Dampfdiffusionssperre auskommen. Entscheidend sind Häufigkeit und Dauer der Feuchtebelastung.

Die Vorteile von Schichtelementen lassen sich wegen ihrer Gestaltungsvielfalt auf Kongress- und Tagungsräume, Messe- und Ausstellungsgebäude ausdehnen. Insbesondere Wände, Decken und Säulen aus Beton stellen riesige Wärmespeicher dar. Die thermische Trennung dieser Bauteile wegen übermässiger Aufheizung aus der Anwesenheit von Personen, intensiver Beleuchtung und anderer Wärmequellen kann durch abgestufte Entlüftung erfolgen. Sie wird von der Grundversorgung abgetrennt und führt nach der Intensität der Wärmebelastung über direkte Abluftkanäle zur Entlastung des Gesamtsystems bei. Luftkanäle mit Umschaltungen zur Direktentlüftung mit separat schaltbaren Ventilatoren bringen die erwünschte Entlastung.

Wechselnde Belastungen in Empfangsräumen, Foyers, Wandelhallen, und Wandelgängen von Kur- und Erholungseinrichtungen, Theatern, Opernhäusern und ähnlichen Gebäuden können nach Voll- und Teilausstattung mit Schichtelementen den hohen Aufwand für Heizung und Kühlung reduzieren. An geeigneten Stellen wird durch Schichtelemente temperierte Luft zu- und abgeführt und sorgt für den nötigen Klimaausgleich. Eine schwierige Aufgabe im Theaterbau ist die Belüftung von Orchestergräben. Vorzügliche Kühlung wird mit Holz-Schichtelementen (15) erzielt, welche aus sehr leichten Nadelhölzern mit eingefrästen exakt berechneten feinen Luftschlitzen in Wandteile und Setzstufen eingebaut sind. Durch geringgehaltenen Andruck im Luftkanalsystem entstehen kaum störende Geräusche noch gefürchtetes Kältegefühl gegenüber den Orchestermitgliedern. Vorsorglich werden die Luftschlitze (25) nur maximal 8 bis etwa 12 Prozent der Schichtelementflächen einnehmen und der Überdruck im Luftkanalsystem sollte bei Auslegung der Anlage nicht mehr als etwa 20 bis 25cm/sec. Luftausblasgeschwindigkeit betragen, die in eine sanfte, diffuse Verdrängungslüftung übergeht.

In ähnlicher Arbeitsweise lassen sich Bühnen und Studios ohne Zugluft belüften. Blähmineralien eignen sich hervorragend, weil alle Belastungen wegen der dosierbaren Massenspeicherkapazität und der Möglichkeit zur Luftabsaugung mit mobilen Luftabsauganlagen gegeben sind. Auf Terrassen, in Wintergärten, Veranden und ähnlichen Aufenthaltsplätzen wirkt sich die thermische Trennung von Bausubstanz und Luft besonders vorteilhaft aus, denn Erwärmung und Abkühlung verlaufen über einen längeren Zeitraum und eine Überhitzung durch starke Sonneneinstrahlung kann kaum eintreten. Werden in Schichtelemente Luftkanäle eingeformt, kann die Wärme fast ungehindert aufsteigen und in die Atmosphäre entweichen. Andererseits lässt sich überschüssige Wärme vorteilhaft speichern, indem hochspeicherfähige Blähmineralien und andere mineralische kornförmige Speichermassen dauerhaft verklebt vor eine Reflexionsschicht einer im Tagesablauf sonnenbeschienenen Wand von Terrassen, Veranden, Wintergärten, aber auch Gewächshäusern montiert und gut luftdurchlässige leichte Schichtelemente davor plaziert werden. In den kühlen Abendstunden geben solche Wände eine anhaltende milde Wärmestahlung ab.

In Anzuchtbetrieben und Tierhaltungen allgemein erweisen sich Schichtelemente sehr leichter bis massiver Beschaffenheit mit Einrichtungen zur wechselweisen Wärmeaufnahme und Wärmeabgabe, Be- und Entlüftung als langfristig wirtschaftlich. Zur Herstellung von langfristig haltbaren Schichtelementen für Stallungen und Gewächshäusern werden den Bindemitteln Zusätze gegen agressive Gase, Flüssigkeiten und Feststoffe, Biocide, antibakterieller und fungicider Wirkung nach Angaben der Hersteller beigegeben.

Der Schutz von Personen, Tieren und Pflanzen soll deren Lebens- und Wachstumsbedingungen begünstigen. Aus den unterschiedlichsten Anforderungen gilt unter Berücksichtigung der Endlichkeit verfügbarer fossiler Brennstoffe auch die Aufgabe zu lösen, den Energieverbrauch drastisch zu senken.

Optimalen Schutz bei Tieren bietet das Fell, beim Menschen die Kleidung und bei Pflanzen alle Varianten des Schutzes vor Kälte, Trockenheit, brennender Sonne und anhaltender Dunkelheit. Allein der Mensch vermag den eigenen Schutz mit Hilfe seines Verstands und der Verfügbarkeit über technische Mittel zu betreiben und wendet seine Fähigkeiten an, die ihm nützliche Tier- und Pflanzenwelt ebenfalls zu schützen.

Aus der negativen Sachlage für den Menschen entwickelte sich nicht der Gedanke an eine das Innenklima optimal schützende Trenn- und Pufferschicht zwischen Bausubstanz und Raumluft/Mensch, sondern an eine weit weniger effektive Wärmedämmtechnik auf den Gebäudeaussenseiten.

Dagegen ist die Zielsetzung bei Verwendung von Schichtelementen, dem thermischen Verhalten der Luft so nahe als technisch möglich und praktisch sinnvoll näher zu kommen. Deshalb enthalten sie den sehr hohen Luftanteil und bestehen berechenbar aus leichten bis sehr leichten Blähmineralien. Nach einem weiteren Erfindungsgedanken nehmen Sie eine wärmetechnisch beabsichtigte Stellung zwischen Luft und einem originären Dämmstoff ein, dessen hohes inneres Luftvolumen aus grobkörnigen Blähmineralien leichter bis ultraleichter Gewichtsklassen besteht und speichern deshalb nur ganz geringfügig Wärme. Sie können aus der Luft von beliebig gestalteten Luftzwischenräumen (4) und einer optimierten Wärmedämmschicht nur verschwindend wenig Wärme aufnehmen und verhalten sich thermisch nahezu neutral. Aus der Wärmeabstrahlung des menschlichen Körpers können sie ebenfalls nur ganz geringe Wärmemengen aufnehmen, wenn sie nur mit einer sehr dünnen Oberflächenschutzschicht (10) ausgerüstet sind. Die verbleibenden geringen Wärmeverluste sind vernachlässigbar. In entscheidender Konsequenz üben sie auf den menschlichen Körper wegen ihres luftähnlichen Verhaltens bei angenehmen Raumlufttemperaturen nicht den wärmeabsorbierenden Einfluss massiver mineralischer Baustoffe aus, sondern können ein auftretendes geringes delta T zwischen Raumluft und Luftzwischenräumen (4) fast verlustfrei halten und steigern die Qualität des Innenklimas im Jahresablauf.

Im Gegensatz dazu sind die normal gemauerte Wand und die übliche Betondecke unter Hinzurechnung von Verputz oder Gipskartonplatten gute Wärmeleiter. Der Temperaturunterschied zwischen ca. +37° Cels. Körpertemperatur und beispielsweise +20° Cels. Oberflächentemperatur auf Wänden und Decken entzieht wegen zu hoher Wärmetransmission dem menschlichen Körper während der Heizperioden zuviel Wärme, die durch entsprechende Kleidung und Wärmezufuhr ausgeglichen werden muss.

In üblicher Bauweise ist dieser Vorgang nicht vermeidbar, denn die Bausubstanz verhindert das ideale Innenklima. Schichtelemente, Luftzwischenräume und abgestimmte Wärmedämmschichten im Gebäudeinnern verhindern die intensive Wärmeabsorption, das Kältegefühl und die Bereitstellung hoher Raumlufttemperaturen und ergeben Energieeinsparungen bei optimalem Innenklima.

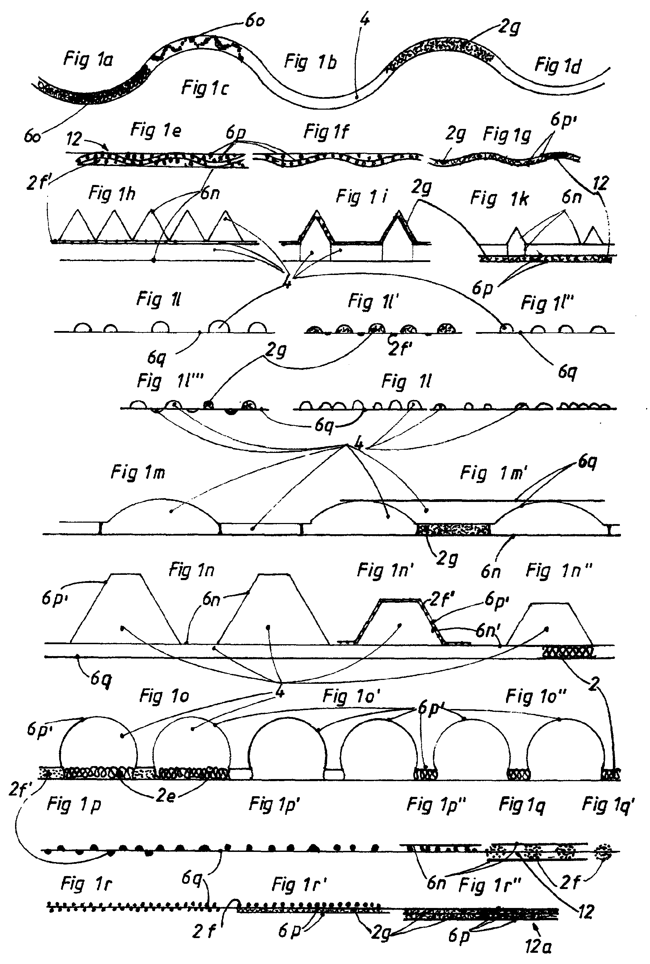

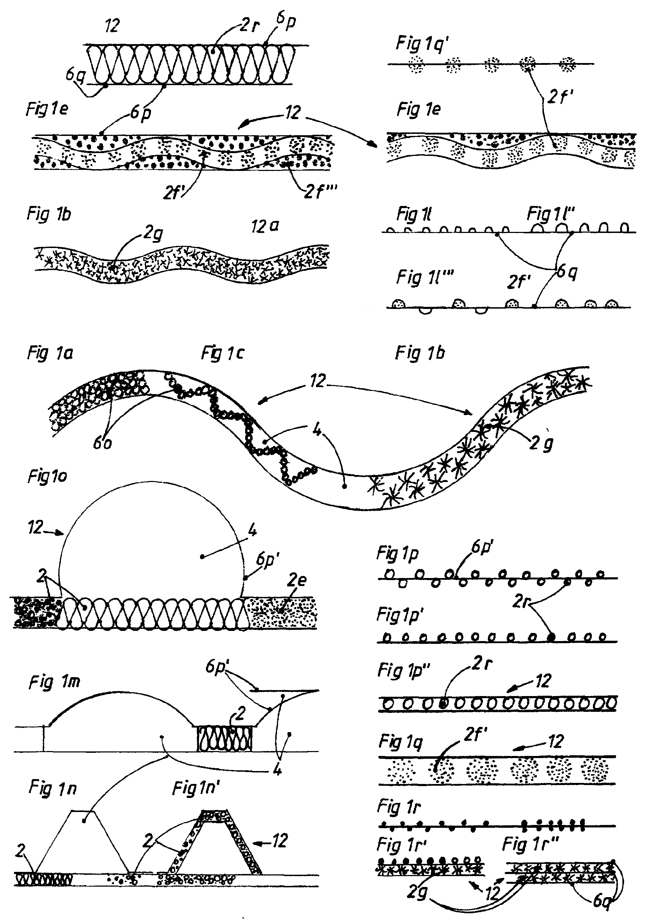

Gemessen an den Belastungen des jeweiligen Aussenklimas werden die erforderlichen Wärmedämmungen bestimmt. Sie können bei jeder Bauweise auf den Gebäudeinnenseiten/-wänden schwächer ausfallen, als auf Gebäudeaussenseiten, denn sie haben zwar direkten Kontakt zur mineralischen Bausubstanz, können aber deren Wärmespeichervermögen und Wärmestrahlung wirkungsvoller abwehren und es verbleibt nur noch ein unvermeidbarer Wärmeverlust. Bei Ausformung von Luftzwischenräumen (4) beliebiger Gestalt und Auftrag einer oder mehrerer Reflexionsschichten (12), bzw. (12a) wie in Abbildung 1 bzw. 1a erkennbar ist, kann auch bei sehr niedrigen Aussentemperaturen dem menschlichen Körper weniger Wärme entzogen werden. Entsprechend der wechselnden Wärmetransmissionen innerhalb der Bausubstanz lässt sich die Sollstärke der Wärmedämmstoffschichten anhand der Herstellerangaben ausreichend genau berechnen. Übliche Abweichungen der errechneten Wärmedämmschichten lassen sich durch intensivere oder verminderte Entlüftung und eine Entsprechung des Wärmeverhaltens der Schichtelemente ausgleichen, indem das Sandwichprinzip innerer Wärmedämmschichten umgekehrt wird und die Bausubstanz zwischen zwei Wärmedämmschichten zu liegen kommt.

Die Wärmeabgabe anwesender Personen, direkte und indirekte Sonneneinstrahlung, Wärme aus Beleuchtung und anderen Wärmequellen ist durch geregelten Luftwechsel aufzunehmen und abzuführen. Der Anstieg der Wärmebelastung durch unterschiedlichste Einflüsse muss ebenso egalisiert werden wie Wärme zugeführt werden muss, weil vollkommene Wärmedämmung ausgeschlossen ist. Soweit dazu Fensterlüftung beitragen kann, soll tunlichst auf sie zurückgegriffen werden, denn die atmosphärische Luft ist im Regelfall besser als unzureichend aufbereitete Umluft. In mit Schichtelementen ausgestatteten Gebäuden verliert man zwar bei kalten Aussentemperaturen einen Teil gespeicherter Wärme, aber der Wärmeverlust bleibt wegen der geringen Wärmespeicherfähigkeit von Schichtelementen denkbar gering. Deshalb erwärmen sie sich nach Schliessen der Fenster sehr schnell. Bei Wärmeüberschuss wegen hoher Aussentemperaturen, erwärmt sich die Raumluft mässig, nicht aber die Schichtelemente im Vergleich zur orginären Bausubstanz.

Die geringeren Wärmeverluste zu jeder Jahreszeit erfordern geringeren Wärmebedarf der sich in höheren Raumlufttemperaturen bemerkbar macht und die Kombination aus Wärmedämmung und Schichtelementen erlaubt die Absenkung der Raumlufttemperaturen um bis zu 3° Celsius.

Ein zusätzlicher Aspekt zur Verwendung von Schichtelementen liegt in der Gebäudeausstattung mit der Kombination aus Heizung Lüftung, Kühlung und Trockenhaltung nach der Europäischen Patentanmeldung Nr. 0 743 494 A 2 welche anstelle üblicher Klimaeinrichtungen das Innenklima sorgfältiger, sicherer und bedarfsgerecht regeln kann. In Zusammenfassung der Klimakomponenten mit der Vorgabe aufbereitete Frischluft einzuspeisen, drängen allgemein vorgebrachte Beschwerden zur steuerbaren Be- und Entlüftung.

Die Verfahrensweise nach der obengenannten Patentanmeldung sieht vor, die Zuluft dosierbar und diffus einzublasen und damit die Voraussetzungen zum besseren Innenklima zu schaffen. Ziel der Überlegung ist, zu jeder Zeit ein vorteilhafteres Innenklima = körperkonformer Verträglichkeit zu erreichen als mit ungeeigneten Verfahren. Schichtelemente nehmen anders als normale Bausubstanz bei hoher Dampfsättigung kein Kondenswasser auf, denn Kondensation findet nur auf Gegenständen und Material mit besseren Wärmetransmissionseigenschaften statt, nicht aber auf Schichtelementen und Dämmstoffen. Die unerlässlich erforderliche steuerbare Be- und Entlüftung muss deshalb Bestandteil zeitgemässer Planung und hoher Wohnqualität sein.

Aus diesem Grund und wegen hoher Temperaturen im Verlauf warmer Sommermonate entsteht ein Wärmeüberschuss, der abgeleitet werden muss. Die Trennung von Bausubstanz und Raumluft ist vorteilhafter, weil sie den massiven thermischen Einfluss auf das Innenklima weitgehend unterbindet und die Temperatursteuerung fördert

In Gebieten mit hohem Wärmebedarf wird eine stärkere Wärmedämmchicht notwendig, als in gemässigten Zonen. Zur Abwehr hoher und sehr hoher Aussenbelastungen empfiehlt sich zwischen Aussenmauerwerk und Wärmedämmschicht eine Entlüftung vorzusehen und auf der wandseitigen Wärmedämmschicht eine Reflexionsschicht (12) bzw. Mehrfachwechsellagen aus hochglänzenden Reflexionfolien mit Dämmstoffzwischenlagen (12) aufzubringen. Besonders dringend wird auf sonnenbeschienen Wänden derart zu verfahren sein. Der Sonneneinstrahlung ausgesetzte Fassaden und Fassadenteile heizen sich sehr stark auf. Sie können Oberflächentemperaturen bis zu +70° Cels., in Mitteleuropa und bis zu über +85° Cels. in Südeuropa erreichen; in Wüstengebieten werden sogar Temperaturen bis zu +120° Cels. gemessen.

Zur Abwehr sehr hoher Aussentemperaturen eignen sich Doppelwände, deren äussere Schicht als Lüftungsfassade mit durchbrochenem Vormauerwerk (7a) oder dünnen Sonnenschutz-Gittersteinen (7c) ausgeführt wird. Die in diesen Regionen während des Sonnenaufgangs nur mässig intensiv scheinende Sonne kann nur kurzfristig die Tragwand (8) anstrahlen und die gegenüberliegende nur während des kurzen Sonnenuntergangs. Deshalb braucht eine Wärmedämmschicht auf der Tragwand nur die Hitze der atmosphärischen Luft abzuwehren. Die hochstehende Sonne erhitzt durch ihre Strahlung nur die durchbrochene Wand, welche wesentlich weniger Massespeicherkapazität aufweist. Dadurch bleibt die jeweilige tragende Wand geringer wärmebelastet, denn die Hitzeabstrahlung zu ihr lässt sich einfacher durch eine wirksame Kombination aus Reflexion und zugeordneter Wärmedämmschicht abwehren. Zusätzlich kann die erhitzte Luft im Luftzwischenraum (4) nach oben steigen und über Durchströmöffnugen (25) von Vormauern entweichen.

In den Regionen zwischen dem 20. und 45. Breitengrad wurde früher wegen der intensiven Sonneneinstrahlung entweder sehr eng gebaut um der Sonneneinstrahlung entgegenzuwirken und vielfach das Erdgeschoss durch Arkadengänge gegen Hitze abgeschirmt, oder bei ausreichenden Platzverhältnissen gebäudenahe Bepflanzung mit Bäumen vorgenommen. In den gemässigten Klimazonen eignen sich Schichtelemente aus vorwiegend leichten Blähmineralien, in die Entlüftungskanäle eingeformt sind. In derartigen Schichtelementen kann erwärmte Luft aufsteigen und beispielsweise durchSimsattrappen, durchbrochene Sonnenabschirmungen (7b') und Öffnungen unter Dächern entweichen.

Vorteilhaft ist der Übergang aus der mineralischen Bausubstanz, diese oder die Wärmedämmschicht mit einer wellenförmigen, (17) waffelförmigen (17a) oder sphärisch (17b) ausgebildeten Oberfläche zu versehen, um Berührungsflächen möglichst klein zu halten und wie bei eingeformten Luftkanälen warme Luft entweichen zu lassen.

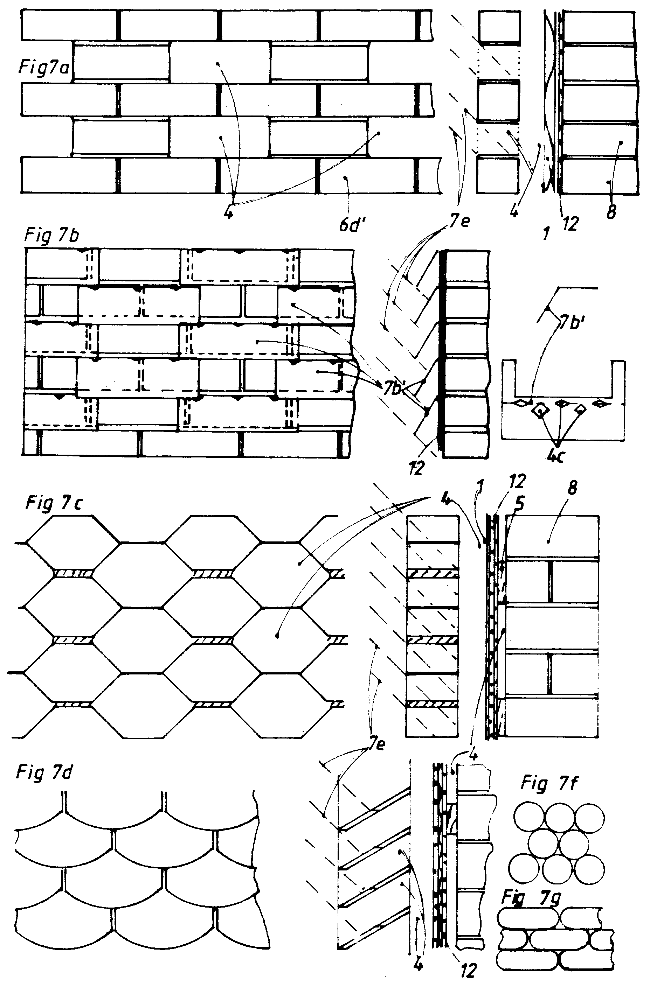

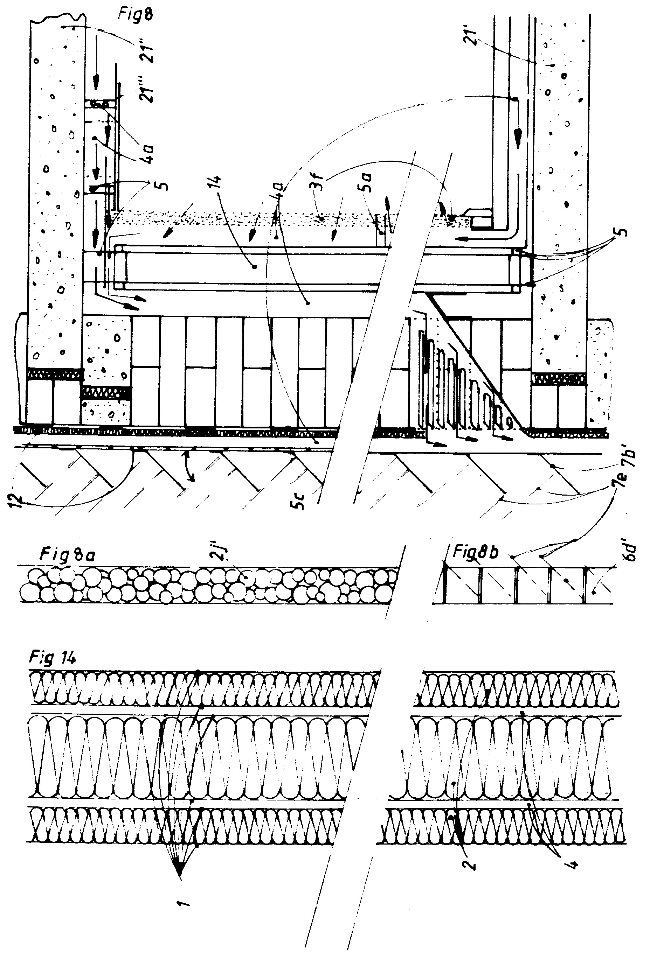

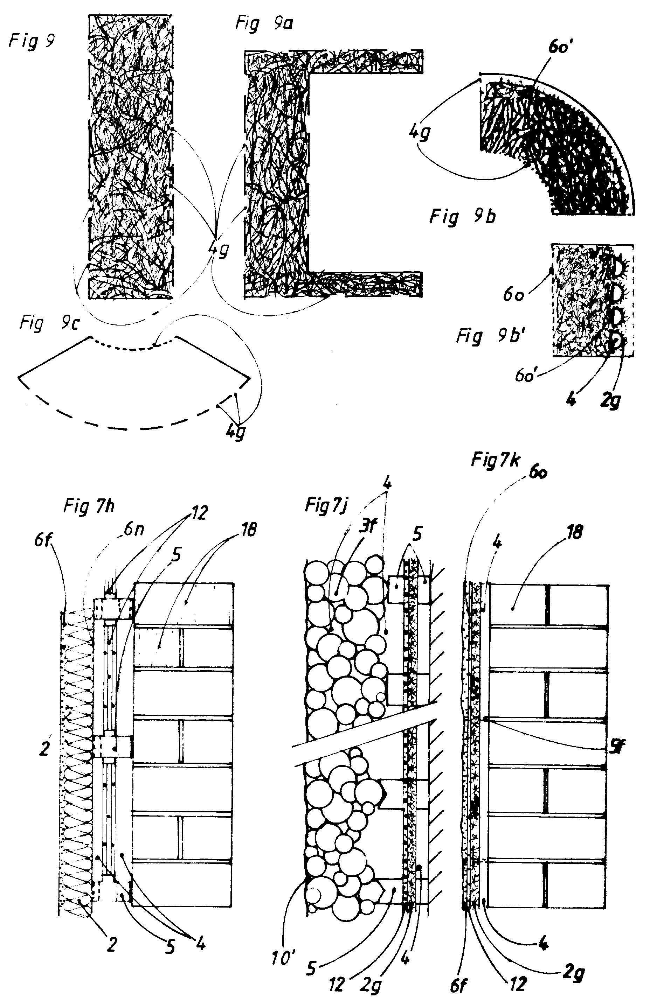

Spezielle Wärmeschutzfassaden lassen sich aus sehr leichten, grobkörnigen und oberflächenverstärkten Blähmineralien herstellen(Fig. 7h, 7j und 8a. Sie erhalten aussen eine helle mit reflektierenden Zusätzen versehene harte Verklebung und eine gleichfalls reflektierende harte Kunststoffbeschichtung. Durch zahllose kleine Luftzwischenräume kann erhitzte Luft nach oben steigen, während die geringe Masse solcher Fassaden nur sehr wenig Wärme speichern kann und deshalb eine intensive Wärmetransmission und innere Wärmestrahlung weitgehend verhindert.

Praktischer Sonnenschutz in den Mittelmeerländern und ähnlichen Klimaregionen sind Pinien und Akazien. Bei gepflegtem Wuchs können sie wie ein Sonnenschirm bis zu zwei Stockwerke und teilweise sogar Dächer beschatten. Andere Möglichkeiten bieten Feigenbäume, Zedern und ähnliche Gewächse, wie Kletterpflanzen, z. B. Wein = Vitis venifera, Wilder Wein = Partenocissus quinque folia, Waldrebe = Clematis, Bougainvillae, Hopfen = Humulus lupulus, Strahlengriffel = Actinidia arguta, Baumwürger = Celastrus orbiculatus, Geissblatt = Lonicera, Knöterich = Polygonum aubertii, und die Glycine = Wisteria cinensis.

Andere lokale Schattenspender sind Zypressen, Palmen und Bambus. Den besten Hitzeschutz bieten Pflanzen mit blassgrünen Blättern in den Farbtönen von Bambus und Palmwedeln.

In sehr heissen Ländern bewähren sich Hitzeschilde (14) mit oder ohne innere Be- und Entlüftung. Sie eignen sich besonders, wenn sie eine oder mehrere gut reflektierende Zwischenschichten aufweisen und als Dämmstoff zumindest eine Lage Aerogele enthalten. Hitzeschilde eignen sich gut unter Dächern, weil sie ähnlich wie bei Wänden eine wirksame Trennung hochbelasteter Bauteile herbeiführen.

Eine zusätzliche Möglichkeit thermischer Trennung besteht in der Verwendung von Mehrfachkammersteinen, (18), beim Bau neuer Häuser. Deren Luftkammern sind gegeneinander versetzt um den Wärmetransmissionsweg zu verlängern und die zur Verminderung der inneren Wärmestrahlung mit Füllungen aus unverrottbaren Dämmstoffen (18a) im Verbund mit reflektierenden Umhüllungen einen sehr hohen Wärmedämmwert erreichen. Werden in horizontale und vertikale Fugen metallische oder Kunststoffanker eingelassen können Dämmstofftafeln mit analog geformten Dübeln zur Befestigung dienen, oder in Vertiefungen (18b) auf den Steinlängsseiten Dämmstoffeinlagen und Reflexfolien aufnehmen. Mit Glasfasergittern gehalten, können diese aufgetragenen Verputz halten.

Die Verkleidung von Wänden und Decken mit Schichtelementen ist eine Variante im Trockenbau. Sie unterscheidet sich jedoch grundsätzlich durch das Vermögen, das Innenklima vollwertig körpergerecht zu steuern und einzupendeln, denn auf alle von Menschen durch Anwesenheit genutzten Gebäude trifft zu, dass allein die Körpertemperatur als thermische Konstante gelten muss, während andere Faktoren variablen Einflüssen unterliegen. Nach einem weiteren Erfindungsgedanken wird das temperaturtypische Verhältnis von +37° Cels. Körpertemperatur und einer üblichen Raumlufttemperatur zwischen +19 und +23° Cels. wegen dem Sonderverhältnis Mensch/Luft zur Richtschnur sinnvoll wünschbarer Idealbedingungen in geschlossenen Räumen. In logischer Folge wird zur Zielsetzung, die gegenwärtige Massenwirkung von Wänden und Decken derart umzugestalten, dass sie nicht länger als Wärmetransmissionsmasse, Wärmeabsorptionsmasse und Wärmestrahlungsmasse in gegenwärtiger Intensität das Idealverhältnis Mensch/Luft stören.

Der Idealzustand wird erreicht, indem Wände und Decken mit exakt berechneten Mehrfach-Wechsellagen aus reflektierenden und wärmedämmenden Schichten von der Bausubstanz getrennt und mit ebenfalls thermisch berechneten Schichtelementen mit Pufferwirkung ausgestattet werden.

Diese Pufferschicht wird in ihrer Substanz aus leichteren und schwereren Blähmineralien bestehen und ausgerichtet an den Belastungen des Aussenklimas und rauminterner Wärmequellen begrenzt Wärme aufnehemen, speichern und über steuerbare Be- und Entlüftung mit wärmerer und kühlerer Zuluft denkbar konstant gewünschte Raumlufttemperaturen erzielen und aufrecht erhalten, bzw. korrigieren, wenn eine Änderung erwünscht wird. Die geringe Wärmespeicherkapazität der Pufferschicht gestattet einen sehr schnellen Temperaturwechsel ebenso, wie die Beibehaltung erwünschter Raumluftbedingungen.

Sehr starke Abweichungen lassen sich schon bei der Wahl vorteilhafter Schichtelemente und steuerbarer Luftzufuhr ausgleichen.

Unter den beschriebenen Voraussetzungen wird die Ausstattung von Räumen im Zusammenwirken mit Mehrfach-Wechsellagen aus hochglänzenden Reflexionsfolien mit Dämmstoffzwischenlage zur Trennung zwischen Bausubstanz und Raumluft zu elementarer Technik zukünftiger Baukultur aussergewöhnlicher Aufenthaltsqualität

Gegenwärtig leben z. B. Mitteleuropäer nur ca. 5 Monate des Jahres ohne Heizung und während der übrigen 7 Monate ist die übliche Warmwasserheizung in Betrieb. Trotz grosser Erfolge der Heiztechnik muss immer noch der unvermeidbare Wärmeverlust im Leitungsnetz wegen der Verlegung im kalten Mauerwerk hingenommen werden. Wird die Warmwasserheizung ausschliesslich zu Heizzwecken betrieben, muss schon bei bescheidenem Wärmebedarf das ganze Warmwassernetz erwärmt werden, um z. B. eine geringe Temperaturerhöhung der Raumluft an kühlen Morgen- und Abendstunden zu erreichen. Der Energieverbrauch steht in keinem vertretbaren Verhältnis zur Wärmeausbeute.

Für den geringen Wärmebedarf lohnt sich eine Kleinwärmepumpe zu betreiben, denn sie kann bei entsprechender Umschaltung auf Kaltluftbetrieb an heissen Tagen Kühlung verschaffen.

Durch den Wirkungsmechanismus der Wärmepumpe, die jeweils in einem Medium mitgeführte Temperatur in Wärme und Kühlung umzuwandeln, werden beide Energieformen aus einem Aggregat nutzbar. Ausgereifte Wärmepumpen erreichen die Leistungszahl von 4,5 und sind deshalb wirtschaftlich. Die Inanspruchnahme ihrer Kälteleistung wurde bisher kaum beansprucht. Durch den verminder ten Wärmebedarf nach Ausstattung von Wänden und Decken mit Schichtelementen wird der Wärmepumpenbetrieb zum Regelfall. Fossile Energieträger für Heizzwecke bleiben dann Ausnahmefälle.

Mit oder ohne Einschlüssen von Mineral- Natur- oder Kunstfasern, bzw. Gemischen daraus, Einformung von Luftkammern (4b), Luftzwischenräumen (4), Luftkanälen, wandseitigen Wellen/Rillen (17), waffelförmigen (17a), genoppten oder shpärischen (17b) Konfigurationen mit Luftkanalcharakter, Rand- und Verwirbelungselementen, Luftleithilfen(5), Luftdrosseln (5a) zur Steuerung von Luftbewegungen, wie Luftansaugung stark erwärmter Luft, aber auch zu gezieltem Verteilen eingespeister Luftvolumina werden steuerbare Wirkungen erreicht. Schictelemente können grundsätzlich geringfügig bis sehr gut luftdurchlässig sein, raum- wand- oder beidseitig geschlossen sein, d.h. alle an die zur Optimierung des Innenklimas zu stellenden materialabhängigen und physikalischen Erfordernisse erfüllen. Sie können mit Aussparungen zur Aufnahme von Einmal-Einfachfiltern (9)mit Dauerhaftauftrag hergestellt werden. Damit lassen sich Verunreinigungen des Abluftsystems weitgehend verhindern. Gleichzeitig wird durch Zugabe von Antistatika die allgemeine Verschmutzung luftdurchlässiger Schichtelemente ausgeschlossen. Einmal-Einfachfilter im Abluftstrom sind in der Lage, bei regelmässigem Wechsel dem gefürchteten sick-room-syndrom entgegenzuwirken, wenn konsequenter Verzicht auf Umluftbetrieb wegen des geringen Heiz- und Kühlbedarfs der Luftdurchsatz minimiert werden kann. Hydrophobierende Zusätze wie, Silicone, Polysiloxane, Parafine, Lackdispersionen oder entgaste Bitunmenpräparate verhindern Durchfeuchtung von Wänden und Decken. Begrenzte Zugabe antibakterieller, biocider und fungicider Präparate schützt Menschen gegen Krankheiten, Ungeziefer und Pilzbefall.

Schichtelemente werden als Wärmespeicherelemente (19a) aus schweren Blähmineralien und wärmespeicherfähigen Zuschlägen durch Verkleben hergestellt. Sie nehmen wegen ihrer Wärmespeicherfähigkeit bei Sonneneinstrahlung und sonstiger Wärmezufuhr auch durch vorgelagerte leichte Schichtelemente Wärme auf, welche sie nach Abkühlung der umgebenden Luft als milde Wärmestrahlung wieder abgeben. Anwendungsgebiete sind Wintergärten, Terrassen, Veranden, Dachgärten, Wandelgänge und Gewächshäuser.

Die thermische Trennung von Bausubstanz und Raumluft mit allen ihren Vorteilen lässt sich auch auf Täfelungen, und andere Holzbaustoffe übertragen, welche je nach Verwendungsform durch Schichtbauweise zur Verbesserung des Innenklimas beitragen. Sie erweisen sich als zweckmässige Verwendung von Holz aus überzähligen Dünnstämmen, Windbruch, Verbiss, Dreh- und Krüppelwuchs leichter Nadel- und Laubhölzer nach Fällen in Dünnbretter zu schneiden, trennen oder zu schälen und zu säumen, vorzugsweise zu flössen, wässern und fachgerecht zu trocknen.

Sie werden zu zwei- oder mehrlagigen Endlosbrettern, -leisten, -kanthölzern, -konstruktions- oder Möbelhölzern weiterverarbeitet. Erhöhten Wärmeschutz bieten sie bei der Verwendung als Täfelungen, Holzdecken, Möbeln und Einbau in Trenn- und Stellwänden, wenn in den Innenlagen kleinere oder grössere Luftzwischenräume verbleiben und zu optimiertem Wärmeverhalten mit beliebigen Dämmstoff- und Reflexionseinlagen versehen werden.

Schichtelemente dieser Verarbeitungsweise werden sehr stabil, wenn die durchschnittliche Faserrichtung der einzelnen Lagen je nach Verwendungszweck und Beanspruchung ein X mit vorteilhaftester Schenkelspreizung ergibt (15).

Schichtelemente aus verleimten Dünnbrettern eignen sich zur Ausstattung von Theatern, Bühnen, Musiksälen, Orchestergräben wegen der zugfreien Be- und Entlüftung, wenn sie mit Bohrungen, bzw. Fräsungen zu Durchströmöffnungen(25) im Niederdruckbereich verwendet werden und der störungsfreien Belüftung dienen.

Normale Holzdecken, abgehängte Decken und Kassettendecken können weitgehend den Heizbedarf vermindern, wenn sie nach dem Prinzip wärmedämmender Holz-Schichtelemente verarbeitet sind. Hoher Wärmeverlust entsteht wenn die wärmere Luft nach oben steigt und zusätzlich die starke Wärmeabsorption von Beton wirksam wird und Wärme durch Transmission an die benachbarte Bausubstanz abgibt. Folgerichtig ist eine konsequente Ausstattung von Betondecken mit Mehrfachwechsellagen aus hochglänzenden Reflexionsfolien mit Dämmstoffzwischenlagen. Sie wirken sehr vorteilhaft, wenn durch punkthafte Aufklebung feinster Dämmstoffpartikel, z. B. Korkschrot (20) ein Minimalabstand durch Luftzwischenräume entsteht.

Zur Heizenergieeinsparung sind abgehängte und Kassettendecken (21) gut geeignet, wenn durch geschickte Plazierung von Luftabsaugöffnungen aufsteigende Warmluft aufgenommen und der Wärmerückgewinnung zugeführt wird. Werden beliebige Einlagen dünner Dämmstofflagen im Verbund mit Reflexfolien in Deckenverkleidungen eingebracht, lassen sich übliche Wärmeverluste um bis zu 85 Prozent vermindern.

Werden an Wand- und Deckenverkleidungen hohe und sehr hohe Ansprüche gestellt, bedeutet integrierbarer Wärmeschutz nur ein Bruchteil anfallender Kosten. Sehr gute Verträglichkeit luftähnlich wirkender Verkleidungen erhöht deren Aufenthaltsqualität entscheidend. Im Verbund von dünnen Dämmstoffeinlagen mit Reflexionsfolien unter Weichholzverkleidungen entsteht das denkbar beste Ausgangsmaterial. Unauffällige Montage lässt eine Sonderausstattung nur erahnen.

Wirksamen Wärmeschutz an Glas- und Fensterflächen bieten zweischalige Horizontal- (22) und Vertikaljalousien, (23) sowie starre Sicht-Sonnenblenden (24). Vorteilhafte Horizontaljalousien (22) bestehen aus stark nach aussen gewölbten oberen Lamellenhälften (22a) und schwächer nach aussen gewölbten unteren Lamellenhälften (22b) aus klaren wetter- und UV-beständigen Kunststofffolien von ca. 1 bis 1,5 mm Stärke. Auf der Innenseite der äusseren oberen Hälfte erhalten sie einen etwa zu 80 Prozent deckenden Sprühauftrag mit beigemischtem feinem Aluminiumpulver und auf der unteren Hälfte einen nach lokal auftretender Hitzebelastung abnehmenden und besser lichtduchlässigen Auftrag mit beigemischtem Aluminiumpulver, damit ausreichend Licht durchdringen kann. Auf der Innenseite der raumseitigen Lamellenhälfte (22c) wird gleichfalls ein leicht deckender Sprühauftrag mit feinem Aluminiumpulver aufgebracht und vorzugsweise eine Dünnschicht (22d) aus Aerogelen oder anderem durchscheinendem Dämmstoff (22e) zwischen beide Hälften unverrückbar eingebracht und anschliessend am unteren Lamellenende (22f) dauerhaft verklebt oder anderweitig verbunden.

Die einzelne drehbare Horizontallamelle üblicher Herstellung bietet sehr guten Hitzeschutz bei stärkster Sonneneinstrahlung, lässt ausreichend Licht einfallen und es kann bei leichter Drehung mehr Licht einfallen. Durch weitere Drehung der Lamellen um bis zu etwa 170° wird erreicht, dass bei Abkühlung die Wärmereflexion umgekehrt wird, sodass die im jeweiligen Raum vorhandene Wärme reflektiert werden kann. Sporadische Veränderung zur Sonneneinstrahlung ergibt sehr wirksamen Hitzeschutz bei gleichzeitiger Abstimmung des Lichteinfalls.

Vertikaljalousien (23) nach ähnlicher Gestaltung und Ausstattung zu Horizontaljalousien brauchen keine unterschiedliche Wölbung der Einzellamellen, sollten aber gleichfalls um ca. 170° drehbar sein, um aus geschlossenen Räumen abstrahlende Wärme zu reflektieren.

Einfacher in der Ausstattung sind starre Sicht-Sonnenblenden (24). Sie kommen ohne Mechanismus aus. Ihre vertikalen Lamellen befinden sich in einem einfachen Rahmengestell, in dem jeweils 2 verschiedenartig geformte Einzellamellen abwechselnd vor- und hintereinander angeordnet werden, damit sie gegenüber rechtwinkliger Einstrahlung bei höchstem Sonnenstand direkten Sonneneinfall verhindern. Die vorderen Lamellen (24a) verdecken mit ihren beiden seitlichen Enden (24b) die jeweils benachbarten, aber zurückgesetzt angeordneten hinteren Lamellen (24c). Die Anordnung ist denkbar einfach, indem eine gedachte Sekante (24e) zwischen den seitlichen Enden (24b) von einer vorderen zur nächsten vorderen Lamelle weitergeführt als gedachte Tangente zur benachbarten hinteren Lamelle (24c) wird. Direkte Sonneneinstrahlung wird durch Aufbiegung der Enden der hinteren Lamellen zu einem Halbkreis (24d) mit einem Radius von etwa 1/20 der grösseren Lamellenradien vermieden. Dabei entsteht bei beliebigem Sonnenstand immer eine fast vollständige Reflexion der einfallenden Wärmestrahlung, ohne den Lichteinfall in heissen Regionen zu stark zu beeinträchtigen.

Im oberen wie im unteren Rahmenteil (24h) starrer Sicht-Sonnenblenden werden die vertikal verlaufenden Lamellen in einen ausgefrästen Führungsschlitz (24g) identischer Biegung der Lamellenhalter (24f) eingefügt, beliebig befestigt und nach Einrichtung auf den höchsten Sonnenstand mit dem jeweiligen Rahmenteil fest verbunden. Dies kann z. B. mit einer Führungsleisten-Abdeckung (24k) erfolgen. Bei Fenstern mit seitlicher Sonneneinstrahlung bei höchstem Sonnenstand erfolgt die Ausrichtung der Lamellen immer auf den höchsten Sonnenstand im rechten Winkel zur gedachten Sekante/Tangente (24e). Bei dieser Anordnung bilden Tangenten und Sekanten parallel verlaufende Geraden. Die Figur 24 zeigt die Draufsicht auf das Montageschema bei direkter (24a)und (24a') bei seitlicher Sonneneinstrahlung im Winkel von 45°. In geringfügiger Änderung können z.B. Lamellenhalter (24f) mit einem Drehhebel (24i) im oberen und unteren Rahmenteil (24h) beweglich eingefügt und mit Seilzug ausgerüstet drehbar sein. Sie eignen sich in stabiler Bauweise sogar zur Verwendung ausserhalb von Gebäuden vor Fenstern und Glasflächen, wenn sie drehbar mit Seilzug zur Änderung der Lamellenstellung hergestellt sind. Sie können auch zwischen Doppelfenstern hervorragende Wirkungen erzielen.

Bekannt ist der hohe Wärmeaufwand um Bäder in Wohnungen etc. auf erträgliche Temperaturen aufzuheizen und noch schwieriger, die Wärmeabsorption gefliester oder gekachelter Bäder zu reduzieren. Bäder sind wegen ihrer Bauweise und Funktion die Räume, in denen der menschliche Organismus besonders intensiv die wesentlich kältere Oberflächentemperaturen von Wänden verspürt. Seit einiger Zeit werden beschichtete Hartschaumtafeln als Unterbau für Fliesen und Kacheln verwendet, welche sehr gut geeignet sind, die übliche Wärmeabsorption zu reduzieren. Sie gehören heute zum gehobenen Standard neuer Wohnungen. In älteren Häusern wird mit Hilfe einfacher Wärmeschutz-Kombinationen aus Kunststoffolien mit eingeschweissten Einfach- oder Wechsellagen aus üblichen Dämmstoffen und Reflexionsfolien die starke Wärmeabsorption gefliester, bzw. gekachelter Wände dahingehend reduziert, dass Wärmeschutz-Kombinationen zur wirksamen Trennung zwischen kalten Wänden und warmer Raumluft Verwendung finden. Mit vertikal eingelegten Versteifungen, punktverschweisst, und wandseitig in ausreichender Zahl von Saugnäpfen zum zeitweiligen Befestigen auf Fliesen bzw. Kacheln, oder Ösen zum Aufhängen ausgestattet, bieten sie einen praktischen und angenehmen Schutz für den nackten warmen Körper. Sie werden in den Massen örtlicher Vorgaben mit oder ohne Aussparungen für Mischbatterien, Seifenschalen, Brauseeinrichtungen, etc. hergestellt, zum zeitweiligen Gebrauch mit ihren Saugnäpfen, bzw. Ösen gehalten, nach Gebrauch gereinigt, getrocknet und aufbewahrt. In Fortführung des Erfindungsgedankens kann die Wärmeschutz-Kombination auch als umlaufender Duschvorhang ausgebildet sein, der in einer beliebigen einfachen, doppelten oder dreifachen Führung umlaufend voll schliessbar sein und an beliebiger Stelle gefaltet während der Nichtbenutzung verbleibt. In ansprechender Farbgebung, bzw. Ausstattung mit ausgewählten Motiven versehen, bieten sie angenehmsten Aufenthalt in Bädern.

Die gegenwärtige Wiederbelebung alter römischer Hypokaustentechnik bedient sich zwar moderner Fertigung und Produkte, nutzt allerdings nicht optimal möglichen Betrieb. Die angebotenen Produkte brauchen ca. 30 bis 50 Minuten bevor die zugeführte Wärme spür- und verwertbar wird. Werden in etwa gleichen Teilen leichte und schwerere, oder für besondere Wirkungsweisen andersartige Mischungen aus vorzugsweise rundkörnigen Blähmineralien verhältnismässig grossen Durchmessers vermischt, hitze- und feuerfest vermörtelt zu luftdurchlässigen Tafeln gegossen und ausgehärtet,ergeben sich reichlich Anwendungsgebiete zur Verbesserung der Nutzung von Kachelöfen, Heissluftöfen und anderen Warmluftgeräten. In luftdurchlässiger Anwendung können die raumseitigen Körner farblich belassen oder eingefärbt sein. Als Durchströmhypokausten mit oder ohne luftdurchlässigem Belag sickert die wärmere/kühlere zugfreie Zuluft steuerbar nach Temperatur und Volumen in den jeweiligen Raum. Vorteilhaft ist die Bestückung ganzer Wandteile mit Durchströmhypokausten als Heiz-, Kühl-, oder Lüftungseinrichtung. In analoger Wirkung wird eine gegenüberliegende Wandseite zur Ansaugung der Abluft gestaltet. Geschlossene Hypokausten werden raumseitig durch Auftrag einer dünnen, gut wärmeleitenden Deckschicht ausgestattet und dienen als reine Wärmestrahlungswände mit sehr kurzer Aufheizzeit. Wird diese Art der Hypokaustentechnik zu gleicher Zeit in Räumen mit der Schichtelementtechnik angewendet, erhält man ein aussergewöhnlich gutes Innenklima.

Die Mehrzahl aller Verkehrsmittel wird durch Klimaeinflüsse, besonders durch intensive und diffuse Sonneneinstrahlung während Standzeiten und Langsamfahrt stark aufgeheizt. Wegen des sehr geringen Luftvolumens in Verkehrsmitteln und der intensiven Wärmeübertragung ist es vorteilhaft Luftauslässe trichterförmig zu vergrössern und Diffusoren aus verklebten oder vermörtelten Rundkörnern in die Luftauslässe einzubauen, um die direkte Luftströmung zu mildern. Dadurch werden zu starke Erwärmung, Abkühlung und Zugluft vermieden. Die in Verkehrsmitteln sehr hohe Wärmebelastungen der Karosserieteile lassen sich durch Einbringen von Mehrfach-Wechsellagen aus vorzugsweise geprägten Kunststoffschaumfolien, aber auch Glaswollvlies zusammen mit Reflexionsfolien erheblich vermindern, indem eine Hitzereflexion zwischen der Innenverkleidung und der äusseren Fahrzeughülle zustande kommt. Die reduzierte Wärmebelastung erlaubt geringere Zuluftvolumina und verbessert den Fahrkomfort.

Zur Verdeutlichung der Patentanmeldung dient die Formel:

$$TVx = (Ps1 \times Ws1 \times V) + Ps2 \times Ws2 \times V) + Ps3 \times Ws3 \times V) + VO ./. R$$

Sie setzt den Kenntnisstand der Vorgänge in der Gebäudemasse, des Wärmeverhaltens des verwendeten Baumaterials, der Physik, der Wärmelehre, Thermodynamik und der Physiologie des menschlichen Organismus voraus.

Die sinnvolle Anordnung der statisch bedingten Bausubstanz im Zusammenwirken von Wärmespeicherkapazitäten, Wärmetransmissionen, Wärmestrahlung und Wärmeabsorption in Verbinung mit Wärmereflexion, Wärmedämmeffekten, offenen wie eingeschlossenen Luftvolumina zur Angleichung thermischer Einflüsse auf den menschlichen Organismus. Das Verhältnis zwischen TVO= Luft und TVx ergibt den Belastungsfaktor zwischen der Raumluft O und der jeweiligen Wirkungen der betreffenden Bausubstanz, bzw. der Schichtelemente. Je höher der Wert TVx ermittelt wird, umso höher steigt der Faktor Wärmebelastung und umso schwieriger wird die Steuerung des auf den Organismus wirkenden Innenklimas. Wird TVO mit dem Wert 1 angenommen, verhalten sich Dämmstoffe zwischen O und 1 und die Gesamtheit der trennenden Wirkungseinflüsse Y + TVO etwa wie 1,3 beim angenommenen Höchstwert 6,0.

Zeichenerklärung: TVO= Wärmeverhalten der Luft/Raumluft,
TVx= spezifisches Wärmeverhalten der Einzelmassen, Wärmespeicherfähigkeit, Wärmestrahlungsvermögen, Wärmeabsorptionsvermögen.
Ps= wirksames Massengewicht,
R= Reflexionsfaktor nach Güte und Zahl der Reflexionsschichten,
V= Volumen,          VO= Luftvolumen,
Ws= spezifisches Wärmeverhalten der Einzelmassen,
Y= Gesamtheit trennender Wirkungseinflüsse.

Stand der Technik

Das Bauwesen des 20. Jahrhunderts hat im Laufe dieser Zeitspanne ganz entscheidende Fortschritte hinsichtlich Gestaltung, Beherrschung statischer Aufgaben und rationaler Produktionsverfahren erzielt. Im gleichen Zeitraum erfuhr die Körperverträglichkeit eher einen Rückschritt. Während gegenwärtig die Baustoffe Beton, Glas, Metalle und Kunststein beherrschend sind, fehlen Produkte und Verfahren echten Klimaausgleichs zwischen Bausubstanz und dem menschlichen Körper. An die Stelle moderater Heizeinrichtungen, natürlicher Kühlung, Fensterlüftung sind technisch aufwendige aber wenig körperfreundliche bzw, körperkonforme Verfahren getreten. Sie beziehen sich auf die Korrektur der Luftbedingungen und übergehen das Masse-Wärmeverhalten der Bausubstanz.

Folge dieser Fehlentwicklung sind verbreitete Klagen wegen Überhitzung, Zugluft, Schwüle und allgemeinem Unwohlseins, welche weder durch Klimaanlagen, Kühldecken, Luftbefeuchter oder Lufttrockner, Decken- oder Standventilatoren zu beheben sind. Ursache dieser Fehlentwicklung ist mangelnder Klimaausgleich zwischen der Bausubstanz und dem menschlichen Körper mit seiner unverrückbaren Fixierung auf die Körpertemperatur von ca. 37° Celsius.

Die Fachwelt weiss zwar, dass in grossen Räumen die sogenannte Klimatisation einfacher ist als in kleinen und mittelgrossen Räumen. Sie hat sich zur Lösung der anstehenden Aufgaben weder angestrengt noch die Problematik als solche erkannt und behoben.

Das körperliche Befinden ist auf den Tatbestand zu reduzieren, ein ausgleichendes Medium zu schaffen, welches das vorhandene Luftvolumen erweitert und im Sinne durchgreifender Pufferung die thermischen Belastungen der Bausubstanz aufzuheben.

In die übliche Bauplanung dringt kein Gedanke an das Unverhältnis zwischen der Wärmespeicherfähigkeit der Bausubstanz gegenüber der von ihr eingeschlossenen Raumluft. Eine genaue Ermittlung des Verhältnisses zwischen beiden Medien lässt sich wegen unterschiedlicher Raumgrössen und der verwendeten Baustoffe nicht festlegen. Bestenfalls kann die Raumluft zwischen einem und drei Prozent der Wärme speichern, die von der Bausubstanz aufgenommen werden kann und beweist damit deren Unvereinbarkeit.

In welcher Form und mit welchen Mitteln beheizt, belüftet oder gekühlt wird, immer und mit voller Wirksamkeit ist die Bausubstanz mit ihren physikalischen Eigenschaften beteiligt und verhindert die klimatische Übereinstimmung.

In sehr grosser Zahl werden Niedrigenergiehäuser entwickelt und als Prototypen vorgestellt. Ihnen allen ist gemeinsam, dass sie sich fast ausschliesslich durch Manipulation von Fassaden und Dächern auszeichnen, nicht aber eine Trennung der Bausubstanz von der Raumluft zum Gegenstand der Entwicklung aufweisen. Bezogen auf den menschlichen Körper ist dieser Mangel als Versäumnis anzusehen, weil der Fortschritt im Bauwesen primär dem Menschen und seinem Befinden zugute kommen soll.

Die der Erfindung zugrundeliegende Produktgestaltung behandelt eine Baustoffgruppe deren wärmephysikalisches Verhalten die Lücke zwischen Baustoff und Dämmstoff in einer äusserst breit gefächerten, besonders gut auf den menschlichen Körper abgestimmten Sensibilität ausfüllt und infolgedessen Raumbedingungen erzeut, welche idealem Aussenklima entspricht. Sie schützt den empfindlichen menschlichen Organismus optimal und steuerbar vor den Einflüssen der massiven Bausubstanz.

Legende und Produktnennungen

Alle Versuche durch technische Verfahren und neue Produkte das Innenklima in mittelgrossen und kleinen Räumen angenehm, kosten- und energiesparender zu gestalten, unterliegen der thermischen Unvereinbarkeit der gestaltenden und betroffenen Komponenten, Bau- und Dämmstoffen, der Luft und dem menschlichen Organismus.

Daraus wird die Notwendigkeit erkennbar, alle Bemühungen auf die konstante Physiologie des menschlichen Organismus auszurichten, die mit seiner evolutionären Umgebung Luft in einem Sonderverhältnis steht, dessen optimale Temperaturspanne gegenüber dem nackten, bzw. sehr leicht bekleideten Menschen in engster Verbindung steht.

Wegen dieser unverrückbaren Tatsache wirken alle Produkte und atmosphärischen Erscheinungen auf das Verhältnis Mensch/Luft ein und bedürfen wegen ihres thermischen Verhaltens, unabhängig von Ursachen mit den Aufenthaltsbedingungen in geschlossenen Räumen zusammen und sind deshalb in ihren Wirkungen erfasst.

Daraus ergibt sich die grosse Zahl aufgeführter Produkte und Erscheinungen um deren Wirkungsweisen durch entsprechende Gegenwirkungen mit möglichst grossen und thermisch getrennten Luftzwischenräumen aufzuheben.

Sie sind im einzelnen unter Ziffern, Buchstaben und Zeichen gekennzeichnet.

| | |
|---|---|
| 1. | Dampfdiffussionssperren, |
| 2. | Dämmstoffe, |
| 3. | Schichtelemente, |
| 4. | Luftzwischenräume, |
| 5. | Abstandhalter, |
| 6. | Baustoffe, |
| 7. | Vormauerwerk, Sonnenschutzverfahren, |
| 8. | Tragwände, |
| 9. | Einfach-Einmalfilter, |
| 10. | Oberflächenschutzschichten, |
| 11. | Luftausströmkörper, Hypokausten und Durchströmhypokausten |
| 12. | Wärmereflexionsschichten, |
| 13. | Fussbodensteine |
| 14. | Hitzeschilde |
| 15. | Holzschichtelemente |
| 17. | Formgebungen Übergänge |
| 18. | Klimaschutzstein |
| 19. | Wärmespeichermassen und Wärmespeicherelemente |
| 20. | punktuelles Aufkleben von Dämmstoffpartikeln |
| 21. | Decken, Kassettendecken, |
| 22. | Horizontal-Jalousien, |
| 23. | Vertikal-Jalousien, |
| 24. | Sicht-Sonnenblenden, |
| 25. | Luftausströmöffnungen, |
| 26. | Wärmekabine/Wärmespeichergewölbe, |
| 27. | Stell- Trenn- Leichtbauwand, |
| 28. | Orchestergraben, Kulissen, Konferenzzimmer, Luftbewegungen |
| 29. | Terrasse/Wintergarten, 30. Gewächshaus, |
| 31. | Kachelofen/Heissluftofen, |
| 32. | Vierkantverbindung, Rundverbindung, |
| 33. | Heizung/Zusatzheizung |

Materialbezeichnungen, Bau- und Hilfsstoffe

| | |
|---|---|
| 2h. | Blähglas/Schaumglas, |
| 2j | Blähton |
| 6a | Fasergips |
| 6b | Leichtbeton |
| 6c | Gas- und Porenbeton |
| 6d | Mauersteine |
| 6e | Beton |
| 6f | Verputz und Leichtverputz, 6f' Mörtel, 6f'' Estrich |
| 6g | Bims |
| 6h | Kunststein |
| 6i | Fliesen |
| 6k | Kacheln |

6l      Glas

6m    Ofenbaustoffe

14.    Hitzeschilde

15.    Holzschichtelemente

17.    Formgebungen

18.    Klimaschutzstein

19.    Wärmespeichermassen/Wärmespeicherelement

20.    Punktuelle Verklebungen

21.    Decken, abgehängte Decken, Kassettendecken

22.    Horizontaljalousien

23.    Vertikaljalousien

24.    Sichtblenden

25.    Luftauströmöffnungen

26    . Wärmekabine,

27.    Stell-Trenn-Leichtbauwand

28.    Orchestergräben, Kulissen, Konferenzzimmer,

29.    Terrasse/Wintergarten,      30. Gewächshaus

31.    Kachelofen/Heissluftofen

32.    Vierkantverbindung, Rundverbindung

33.    Heizung/Zusatzheizung

Dämmstoffe

2a    Polystyrolschaum, 2a Polystyrolschaum extrudiert

2b    Polyurethan

2c    Polyetylenschaum

2d    Polymedacrylimid

2e    Glaswolle geschleudert, 2e' Glaswolle gezogen

2f'    Perlite Rundkorn, 2f" Perlitefasern 2f'''Perlite Schüttung

2g    Aerogel

2h    Blähglas/Schaumglas      2j Blähton

2k    Kokosfasern      2l Papierwolle

2m    Heraklith      2n Steinwolle

2o    tierische Wolle      2p Vermiculite

2q    Weichfaserprodukte      2r sonstige Dämmstoffe

12    Mehrfach-Wechsellagen aus hochglänzenden Reflexionsfolien mit Dämmstoffzwischenlagen

Die Zusammensetzung der Schichtelemente (3) wird durch die erstrebte Wirkung vorgegeben, um einen bis zu 85-prozentigen Luftanteil zu erreichen. Die Verwendung sehr leichter und grobkörniger Blähmineralien lässt diesen hohen Luftanteil zu und kann die Angleichung thermischen und thermodynamischen Verhaltens vorausbestimmen, ohne originärer Dämmstoff zu werden Gleichzeitig wird körperkonformes Verhalten bei offenporiger Herstellung durch Massenverringerung erreicht. Werden geschlossene Oberflächen gefordert, können diese unter optimaler Zugabe feinster und leichtester Blähmineralien, Fasern, Korkschrot/Korkmehl, Sägespänen, Rindenmehl und ähnlichen Zuschlägen und dem Minimum an hydraulischen Bindemitteln hergestellt werden.

Zu beachten ist die Unbrennbarkeit jeweiliger Zusammenstellung. Innere, eingeformte und rückseitige Luftzwischenräumen verringern das wärmewirksame Gewicht. Weiteres Gebot ist, zwischen der originären schweren Bausubstanz und Schichtelementen immer eine thermische Trennung herbeizuführen.

Schichtelemente eignen sich als Diffusoren zur Be- und Entlüftung ebenso wie für die Temperatursteuerung mittels zugeführter Luft. In tieferen Wand- und Deckenlagen können schwere und geeignete Mineralien hoher Wärmespeicherfähigkeit bei reiner Verklebung mit beispielsweise Epoxidharzen als Wärmespeichermassen zur temporären Wärmespeicherung dienen. Wegen der grossen Auswahl vorteilhafter Zuschläge, welche alle Regionen anbieten, kann das jeweils erstrebte Wärmeverhalten vorbestimmt werden.

Die Fig. 1 bis 1r" stellen unterschiedliche Formen von Dampfdiffusionssperren dar, welche je nach Bauwerk, Belastung, Klimazone und Erwartung an die Güte der Diffusionsdichte gestellt werden. Aus Gründen rationaler Fertigung und gleichzeitiger Unterbrechung der gebäudeinternen Wärmestrahlung reicht die einfache Dampfdiffusionssperre nicht aus, wenn zwischen Bausubstanz und Dampfdiffusionssperre kein, bzw. ein zu geringer Luftzwischenraum vorhanden ist, oder auch die einfache Reflexionsfolie möglichen Belastungen nicht standhält. Besonders in älternen Gebäuden mit schadhaftem Mauerwerk kann bröckelnde Bausubstanz zur Dampfdiffusion führen. Kleine bis grossvolumige Luftzwischenräume (4) zwischen einzelnen Reflexionsfolien verhindern, bzw, mindern die Wärmetransmission im Zusammenwirken von Dämmstoffen und Dampfdiffusionssperren. In der Materialbezeichnung sind die gängigsten Dämmstoffe und Folien erfasst, damit der Anwender geltenden Bauvorschriften entsprechen, bzw. Ansprüchen der Bauherrschaft nachkommen kann. Die zusätzlich verwendeten Bezeichnungen 12 und 12a betreffen Mehrfach-Wechsellagen aus hochglänzenden Reflexionsfolien mit Dämmstoffzwischenlagen

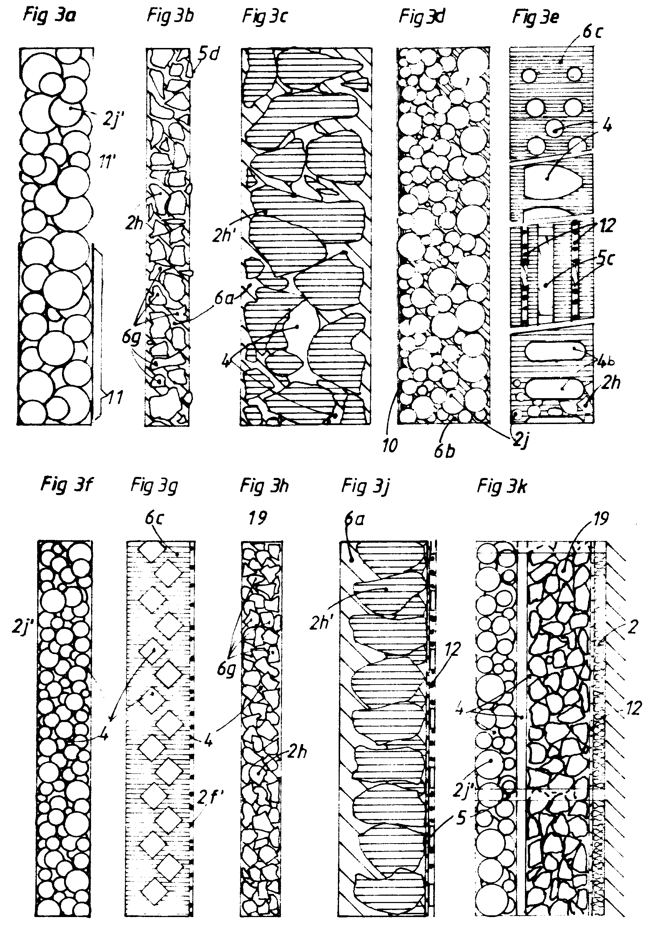

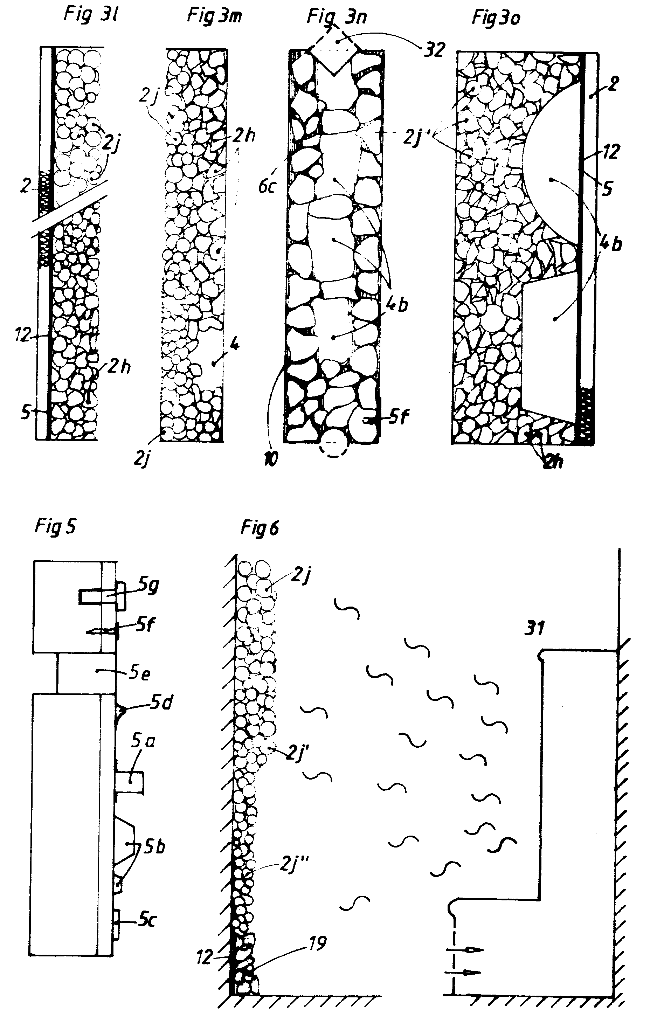

Unter den Fig. 3a bis 3 , sind Schichtelemente dargestellt, welche in der Reihenfolge 3a vorwiegend als Diffusor, 3b in Fasergips, bzw. Gasbeton eingelagerter Blähglasbruch 2h' mit ausgebildeten Abstandsnoppen 5d, 3c mit Reflexionsbelag versehener Blähglasbruch (2h') in Fasergips und zusätzlichen Luftzwischenräumen 4 eingelagert sind und in 3d in Leichtbeton (6b) vermörtelter Blähton, der mit einer Oberflächenbeschichtung (10) versehen ist.
3e stellt eine Reihe von unterschiedlichen Schichtelementen aus Gas- oder Porenbeton (6c) dar, in denen Luftzwischenräume (4) Mehrfach-Wechsellagen aus Reflexionsfolien mit Dämmstoffzwischenlagen (12) und Abstandhalter (5c) und Blähtonkörner (2j), bzw. Blähglasbruch (2h') eingelagert sein können. 3f zeigt ein Schichtelement aus verklebten, mit Reflexionsbelag (2j') versehenem Blähton. 3g stellt ein anderes Schichtelement aus Gas- oder Porenbeton mit eingeformten Lufteinschlüssen zur Erhöhung des Luftanteils und einer Lage aufgeklebten Perlite Rundkorns dar, 3h ein verklebtes Schichtelement aus beispielsweise Marmor- Quarz- oder Specksteinbruch dar, dessen Verwendung als Wärmespeicherelement (19a) dient um bei Sonneneinstrahlung aufgeheizt, nach Sonnenuntergang Wärmestrahlung beispielsweise auf Terrassen oder in Gewächshäusern abzugeben. Fig. 3j ist ein montagefertiges Schichtelement aus Fasergips als Bindemittel und grobkörnigem Blähglas und rückseitigem Belag einer Dampfdiffusionsschicht und Abstandhaltern.
3k stellt ein Schichtelement ausserordentlicher Ausstattung dar, indem eine Dämmstoffschicht 2, eine Mehrfach-Wechsellage aus Reflexionsfolien mit Dämmstoffzwischenlagen (12) und eine starke Schicht Wärmespeichermasse (19), verbunden durch die Abstandhalter (5), den Luftzwischenraum (4) von der raumseitigen Oberflächenschicht aus Blähtonkörnern (2j' mit Reflexionsbelag und einer beliebigen textilen Bespannung bzw. Tapete besteht. Die grosse Zahl von Luftzwischenräumen (4) lässt zu, mit einer nicht dargestellten Luftzufuhr nach Wunsch und Luftabsaugöffnungen einer textilen Bespannung oder bedruckten Glasfasertapete das thermische Verhalten in einer unverbesserbaren Qualität herbeizuführen.
3l zeigt ein Schichtelement mit Wärmedämmschicht (2) Abstandhaltern (5) und dazwischen eingelegter Mehrfach-Wechsellage (12) aus Reflexionsfolien mit Dämmstoffeinlagen. Der Oberteil besteht nur aus Blähtonkörnern mit Reflexionsbelag um möglich wenig Wärme aufzunehmen, während der Unterteil aus Blähglas bzw. Schaumglas besteht. 3m stellt ein Schichtelement aus einem Gemisch aus Blähtonkörnern mit/ohne Reflexionsbelag (2j und 2j') und Blähglas, bzw. Schaumglas dar in dem rückseitig ein Luftzwischenraum (4) belassen wurde und mit textiler Bespannung versehen ist. Eine weitere Version 3n zeigt ein Schichtelement aus grobkörnigem Blähglas, bzw. Schaumglas(2h) voll eingebettet mit Vermörtelung aus Oberflächenbeschichtung (10) mit grossen Lufteinschlüssen (4) und wahlweise einer Vierkantverbindung ( 32), bzw. Rundverbindung zu folgenden Schichtelementen darüber, bzw. darunter und einem Abstandhalter (5f). Fig. 3o stellt ein Schichtelement vorwiegend aus Blähglas/Schaumglas (2h) und geringfügigen Zugaben von Blähtonkörnern mit Reflexionsbelag (2j') dar, welches sich durch sehr geringes Gewicht und zusätzlich grossen Luftzwischenräumen (4) auszeichnet und wandseitig mit einer Mehrfach-Wechsellage aus hochglänzenden Reflexionsfolien mit Dämmstoffzwischenlagen, eingebetteten Abstandhaltern(5) und einer zusätzlichen Dämmstofflage (2) ausgestattet zur Direktmontage ausgerüstet ist.
Fig. 5 zeigt einzelne Darstellungen von Abstandhaltern, welche je nach Bedarf und Eignung Verwendung finden und deren Bedeutung darin liegt, zwischen massiven Baumassen und Schichtelementen, aber auch Dämmstofflagen und Reflexionsfolien jegliche Berührung zu vermeiden, welche zur Wärmetransmission führt. Ihr Vorteil erweist sich durch die Dauer der Wirksamkeit in jeder klimatisch bedingten Situation.
In Fig. 6 ist die Wärmestrahlung eines Kachelofens (31)auf die gegenüberliegende Wärmereflexionswand dargestellt. Je nach vorhandener Mehrfach-Wechsellagen aus hochglänzenden Reflexionsfolien mit Dämmstoffzwischenlagen (12) und Schichtelementen aus Blähtonkörnern (2j), solchen mit Reflexionsbelag (2j') und Wärmespeicherschichten (19) kann wahlweise das Innenklima sehr genau gesteuert werden und die Heizleistung eines Kachelofens für weitere Räumen nutzbar gemacht werden.

Fig. 7a zeigt eine Wandkonstruktion mit Tragwand (8) und durchbrochener Vormauerwand. Derart zu bauen bedeutet, Wärmebelastungen aus intensiver Sonneneinstrahlung spürbar zu vermindern wobei mit Hilfe von Mehrfach-Wechsellagen aus hochglänzenden Reflexionsfolien mit Dämmstoffzwischenlagen (12) und Dampfdiffusionssperren (1) auch die atmosphärische Hitzebelastung reduziert werden kann. Einfallende Sonneneinstrahlung erwärmt nur das Vormauerwerk, erhitzte Luft kann im Luftzwischenraum (4) nach oben steigen und entweichen. Die Luftqualität im Gebäudeinnern wird durch geschickte Be- und Entlüftung leicht auf bestem Stand gehalten.

Für neu zu errichtende Gebäude eignet sich die Sonnenstrahlenabschirmung nach Fig. 7b mit eingemauerten dünnen Sonnenabschirmblenden 7b'. Die Ausstattung ist relativ preiswert, sorgt für Entweichen der Stauwärme durch den ausgestanzten Luftdurchlass (4c) und schützt das Mauerwerk zusätzlich mit in Streifen aufgebrachte Mehrfach-Wechsellagen aus hochglänzenden Reflexionsfolien mit Dämmstoffzwischenlagen (12) und Abstandhaltern (5b), bzw. (5c), welche nicht gezeichnet wurden aber deutlich in der Darstellung der Fig. 7c sichtbar sind. In Regionen mit sehr hohen Temperaturschwankungen zwischen Tag und Nacht, auch wie zwischen Sommer und Winter erscheint es ratsam, Hitze- und Kälteabwehr durch Sandwich-Bauweise, d.h. mit Abwehr von Hitze und Kälte sowohl innen als auch aussen zu verfahren.

Fig. 7c zeigt einen Sechseck-Wabenstein aus sehr dünn ausgebildeten Waben, welche wahlweise vermörtelt oder verklebt werden. Das sehr geringe Eigengewicht verhindert eine massive Erwärmung und schirmt die Sonneneinstrahlung (7e) sehr gut ab. Wie in Fig. 7a, 7b und 7d wird mit Aufbringen einer Mehrfach-Wechsellage aus hochglänzenden Reflexionsfolien mit Dämmstoffzwischenlage (12) eine starke Erwärmung des Bauwerks durch Hitze aus der Atmosphäre verhindert. Die Darstellung in Fig.7d, 7f und 7g zeigt weitere Formen von Abschirmungen der Sonneneinstrahlung durch schräg ausgebildete Waben und verschiedene Rohrformen.

Die Fig. 8 stellt einen aufwendigen, aber sehr wirksamen Hitzeschutz dar, der bei sehr geringem Energieaufwand und vorwiegend gezielter Luftbewegung Hitzebelastungen abwehrt und deshalb für Wüsten- Savannen- und Dschungelklima besonders geeignet ist. Dieser Klimazonen üblichen Dauerhitzebelastung wegen lohnt sich die Ausführung mit mehrfacher Hitzeabweisung. Durch den Luftkanal (4a) über der Betondecke (21') wird kühle Luft zwischen den Hitzeschild (14) und den unteren Teil des Schichtelements (3f), getrennt mit Abstandhalter (5a) zugeführt und nach Aufnahme der Raumluftwärme in den oberen Teil des Schichtelements (3f) zusammen mit der zur Decke (21") aufgestiegenen Warmluft zwischen dem tragwandseitigen Luftkanal (4a) und den Hitzeschild (14) nach unten zu den Luftschlitzen (4f) gedrückt. Zur zusätzlichen Hitzeabweisung dienen die Konstruktionen nach den Fig. 7a, 7b, 7c, 7d, 7f und 7g, bzw. als Leichtfassade nach Fig. 8a.

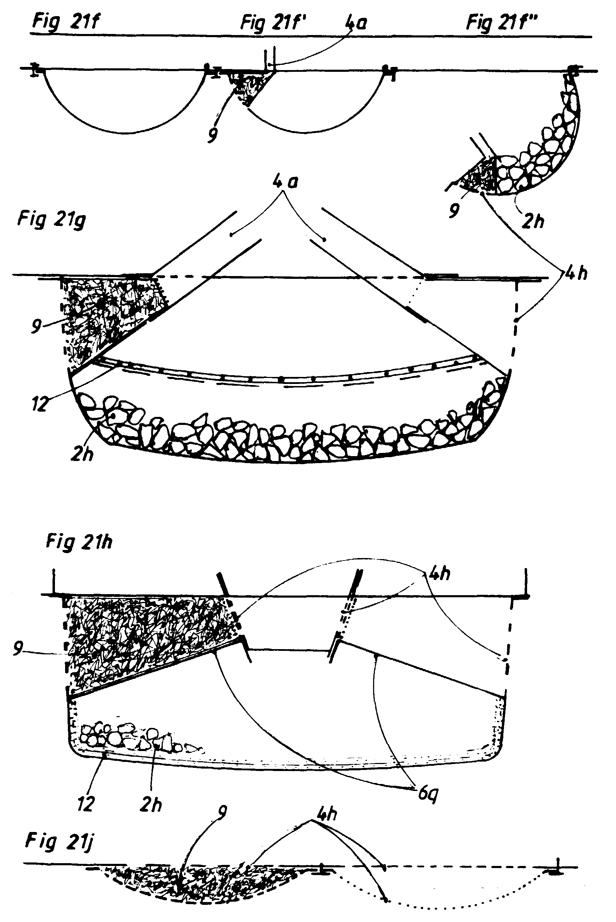

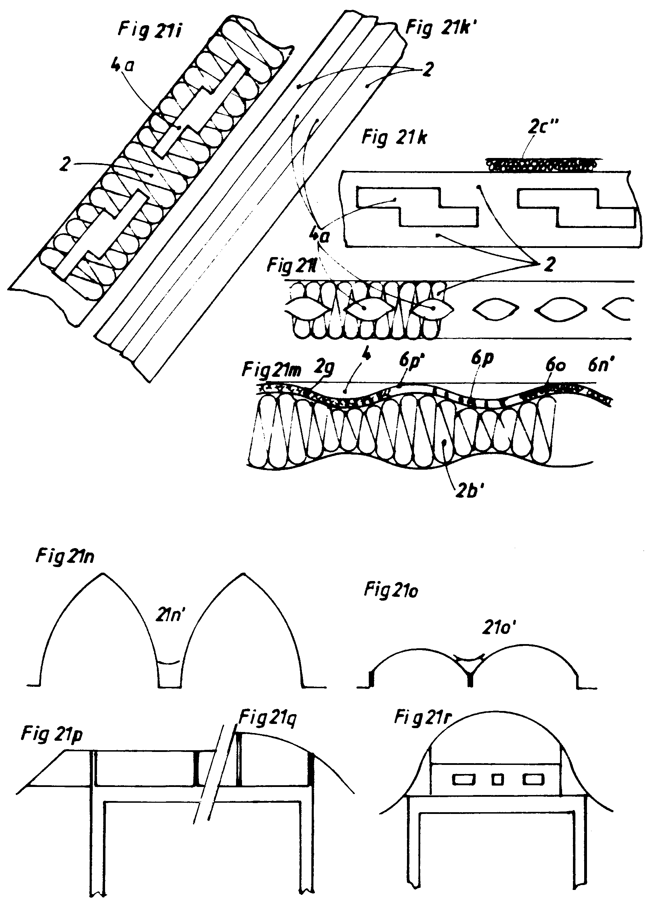

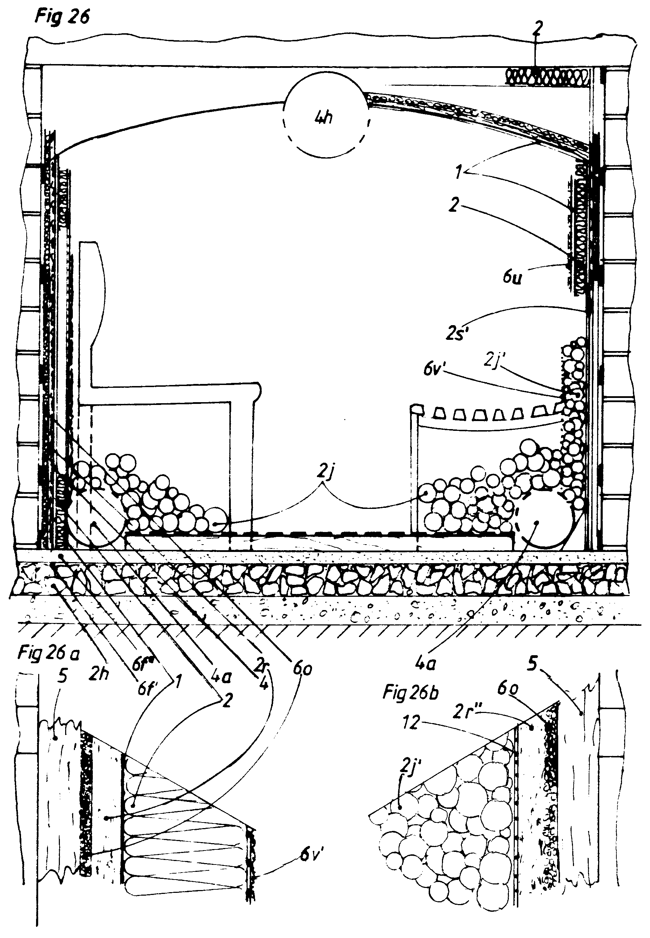

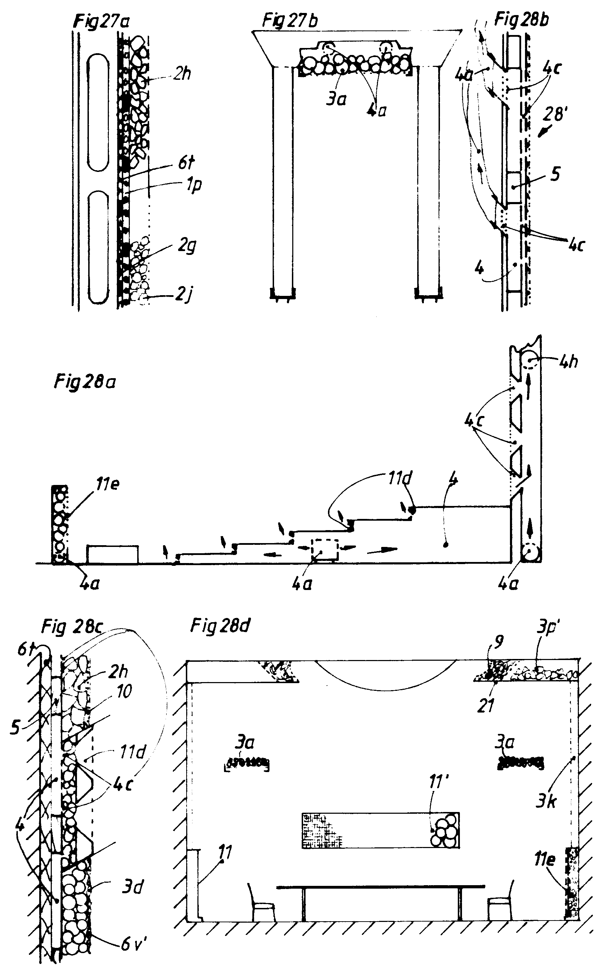

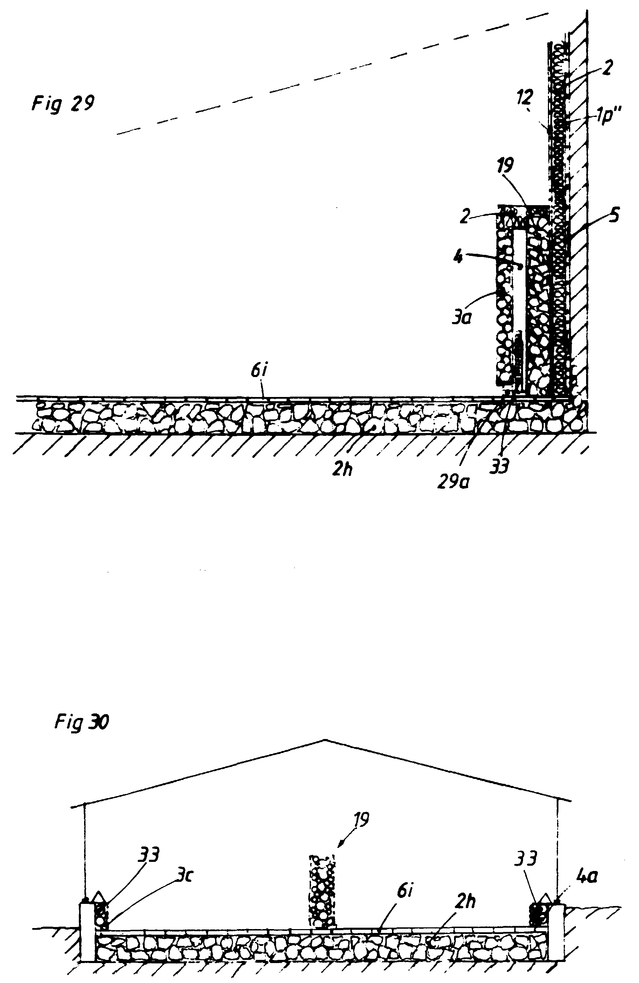

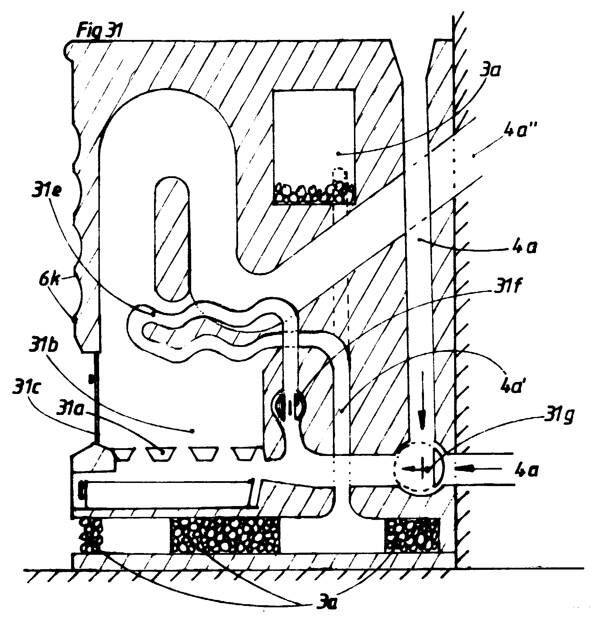

Fig. 14 stellt einen Hitzeschild aus beliebigen Dämmstoffen (2) mit Luftzwischenräumen 4 und mehreren Lagen Dampfdiffusionssperren dar.

Die Fig. 9, 9a, 9b und 9b' zeigen Abluftfilter in verschiedenen Formen und Ausführungen. Sie können auch nach Fig. 9b' mit zusätzlicher Wärmeabweisung unter Verwendung von beispielsweise Kunststoff-Filterschichten (9d) ausgeführt werden, deren Spezifikation nach Herstellerangaben erfolgen soll. Fig. 9c zeigt nur eine skizzierte Filterumhüllung.

Fig 7h zeigt eine Tragwandkonstruktion aus Klimaschutzsteinen (18) und vorgehängter Fassade mit breiten Luftkanälen (4), separat an Abstandhaltern befestigten Mehrfach-Wechsellagen aus hochglänzenden Reflexionsfolien mit Dämmstoffzwischenlagen (12)und einer verputzten Dämmstoffschicht (6f) mit rückseitiger Kunststoff-Folie (6n). Die Konstruktion nach Fig. 7j ist ausgebildet als leichte Sonnenschutzfassade mit einer wetterbeständigen Kunststoffbeschichtung (10') und dauerhaft verklebten sehr leichten, grossvolumigen Blähmineralien mit Reflexionsbelag und grossen Luftzwischenräumen (4), in denen erwärmte Luft entweichen kann und einer Mehrfach-Wechsellage aus hochglänzenden Reflexionsfolien mit Dämmstoffzwischenlagen (12).

Fig 7k stellt eine weitere Fassadenkonstruktion grosser Festigkeit mit einer hochbelastbaren Verputzschicht auf einer Mehrfach-Wechsellage aus hochglänzenden Reflexionsfolien mit Dämmstoffzwischenlagen (12) dar, welche nur mit Abstandhaltern (5f) gehalten werden.

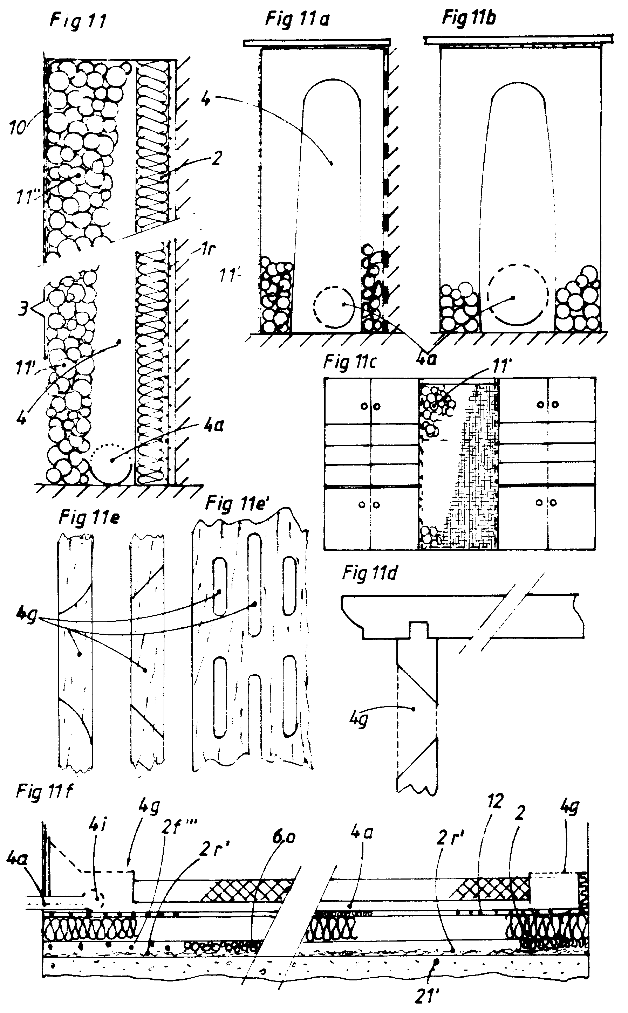

Die Fig. 11 bis 11f zeigen Luftausströmkörper in verschiedenen Arbeitsweisen, beginnend mit einer Durchströmhypokauste Fig 11 als wahlweise nutzbare Heiz- oder Kühlwand mit wandseitiger Wärmedämmschicht (2) und Dampfdiffusionssperre, (1r) um Wärmeverluste zur Wand zu verhindern. Aus dem Luftkanal (4a) strömt erwärmte, bzw. gekühlte Luft in den Luftzwischenraum (4) und sickert im unteren Teil des Ausströmkörpers (11') in den Teil, der als Diffusor (3) dient in den jeweiligen Raum. Immer auf die gebäude- und nutzungsbedingte Situation werden Ausströmkörper nach Fig. 11a an einer Wand, bzw. Fig. 11b freistehend, auch als Raumteiler oder Teil eines Raumteilers, aber auch als Einbauteil zwischen Möbeln und anderen Einrichtungen nach Fig. 11c montiert. Der Luftdurchgang kann beliebig durch eine Oberflächenschutzschicht (10) verhindert werden, sodass eine verbesserte Version einer üblichen Hypokaustenwand entsteht, welche nur ganz kurze Aufheizzeiten benötigt und entsprechend geringen Wärmebedarf erfordert. Diese Art Hypokaustentechnik eignet sich besonders, um Restwärme einer starken Wärmequelle in benachbarten Räumen zu verwerten.

Werden für Ausströmkörper anstelle leichter und sehr leichter Blähmineralien mit hochspeicherfähigem, mineralischem Material zu Wärmespeichermassen verwendet, können sie über einen relativ langen Zeitraum als Heizkörper dienen.

Fig. 11e zeigt den Schnitt durch eine Durchströmöffnung (4g) und Fig. 11e' die Ansicht bei Verwendung von Holz, bzw. Holzwerkstoffen und in Fig. 11d den Schnitt durch eine Setzstufe.

In Fig. 11f ist dargestellt, wie aus Bodenausströmöffnungen Warm- bzw. Kaltluft zugeführt wird. Im Zuluftregler (4i) wird das Zuluftvolumen bestimmt und strömt wie auf der linken Seite der Darstellung erkennbar aus einer angewinkelten und waagrechten leicht erhöhten Ausströmöffnung (4g) in den Raum und rechts nur aus der waagrechten angeordneten. Um Wärmeverluste zu reduzieren wird auf die Betondecke (21') eine bituminierte Weichfasertafel (2r'), ggf. eine Perliteschüttung (2f''')oder Kunststoffblasenfolie (6o) aufgebracht. Darauf folgt die übliche Wärmedämmschicht (2) und zur Reflexion der im Luftkanal(4a) mitgeführten Wärme eine Mehrfach-Wechsellage aus hochglänzenden Reflexionsfolien mit Dämmstoffzwischenlagen (12). Die zwangläufig entstehenden Luftzwischenräume und der hohe Wirkungsgrad reflektierender Folien sichern ganz minimale Wärmeverluste und ständig bessere Aufenthaltsbedingungen.

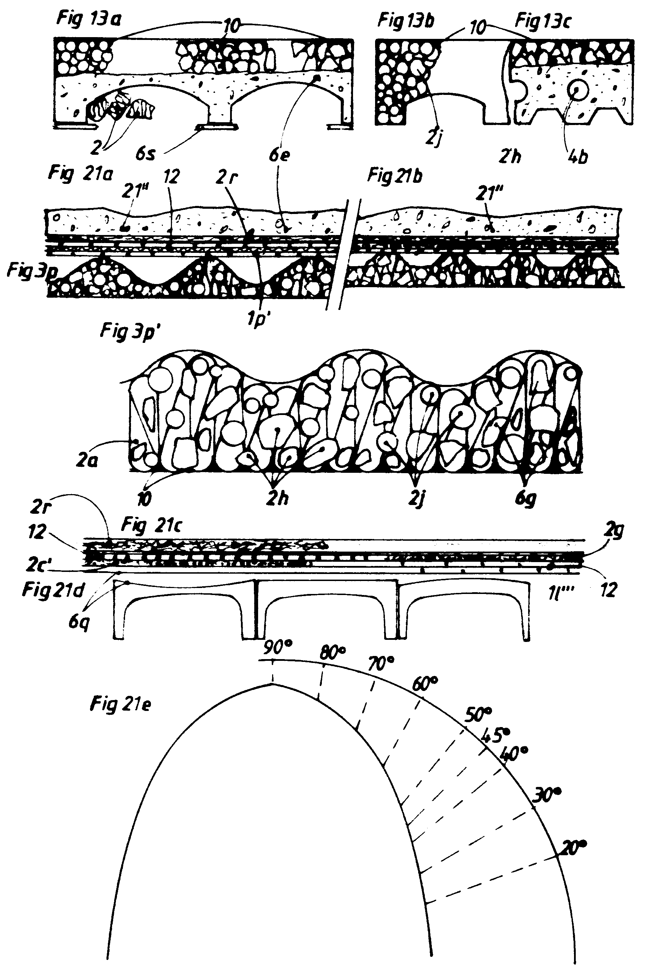

Fig. 13a zeigt ein Fussboden-Schichtelement mit sphärisch ausgebildetem unterem Teil und einer aufgemörtelten Oberschicht aus wahlweise Blähton (2j) höherer Gewichtsklasse oder Blähglas (2h), bzw. einem Gemisch daraus mit einer Oberflächenschutzschicht (10) entsprechend geforderter Festigkeit mit möglicher Füllung aus beliebigem gebrauchtem Dämmstoff in den sphärischen Hohlräumen zur Verminderung der Wärmestrahlung aus der jeweiligen Auflagerfläche. Ähnlich, jedoch für höhere Belastung werden die Fussboden-Schichtelemente nach Fig. 13b und 13c in massiver Herstellung und mit der Unterseite in Trapezform ausgebildet. Fussboden-Schichtelemente können auch eine waffel- oder wellenförmige Unterseite erhalten, um die Wärmetransmission aus der Auflagerfläche gering zu halten. Zwischenlagen, beispielsweise aus Holz (6s) oder Holzwerkstoffen vermindern die Wärmetransmission gleichfalls.

Die Fig. 21a und 21b stellen eine wichtige Bauweise im Deckenbereich dar. Die thermische Trennung ist von grosser Wichtigkeit, wegen aufsteigender Wärme, welche von massiven Baumassen begierig aufgenommen wird und ständiges Nachheizen während der Heizperioden verlangt. Verwendet werden vorzugsweise Weichfaserplatten (2r) Mehrfach-Wechsellagen aus hochglänzenden Reflexionsfolien mit Dämmstoffzwischenlagen (12) Kunststoffblasenfolien (6o) oder andere verfügbare Dämmstoffe zusammen mit Schichtelementen, die nach Fig 3p' ausgebildet sind und deren deckennahe Oberfläche wellen- waffel- oder sphärisch geformt sein können und aus einem Gemisch der Dämmstoffe (2a bis 2 d) als Trägermaterial mit Einschlüssen von Blähmineralien wie Blähton (2j), Blähglas (2h), Perlite Rundkorn 3f''', und anderen geeigneten Dämmstoffen bestehen kann und in gegenteiliger Zusammensetzung aus vorwiegend verklebten Blähmineralien bestehend mit Einbettung von geeigneten Dämmstoffen hergestellt sein können, damit sie die lokal auftretenden Wärmebelastungen weitestgehend aufheben. Diese Idealformen können je nach Raumnutzung und Klimazone mit wechselnd abgestimmten Volumina der Zuschläge optimales Innenklima herbeiführen. Die Detaildarstellung Fig. 3p' zeigt ein Beispiel.

Die Fig. 21c zeigt eine ähnliche thermische Trennung von einer nicht gezeichneten Decke aber deutlicher Darstellung die verschiedenen Schichtungen unter einer Betondecke und die Fig.21d mögliche Formen zu verwendender Kassettenelemente für Decken.

Die Fig. 21e lässt eine leicht nach oben zugespitzte Kuppel als sehr vorteilhafte Dachform erkennen wie durch die gestrichelt zu sehenden Einfallswinkel der Sonneneinstrahlung gezeigt wird. Eine allseitig gerundete Oberfläche erlaubt kaum rechtwinkliges Auftreffen der Sonneneinstrahlung. Damalige Baumeister wussten, warum sie Kuppeln gestalteten und haben diese schon vor Jahrhunderten mit einer Reflexionsschicht ausgestattet. Wird die Möglichkeit zur Entlüftung genutzt, kann die hohe Wärmebelastung in heissen Klimazonen beachtlich vermindert werden. Diese Bauweise durch Ausbildung von mehreren Kuppeln auf Flachdächern kann auch heute angewendet werden, Fig. 21n. Wichtig ist eine sehr leichte Bauweise zur Vermeidung grosser Massen mit ihrer Wärmespeicherfähigkeit. Besteht die Gefahr von Sandstürmen, verlangen Kuppeln eine dicht verschliessbare Entlüftung.

Die Fig. 21f, 21f' und 21f'' zeigen nebeneinander die gleiche Bauform einer abgehängten Decke mit den Unterschieden, dass Fig. 21 f ohne Filter und Wärmedämmschicht, Fig 21f' mit Filter und die Ausführung nach Fig. 21f'' eine Füllung mit Blähglas (2h) zur Wärmedämmung gegenüber der Decke aufweist. Die Einlage einer Mehrfach-Wechsellage aus hochglänzenden Reflexionsfolien mit Dämmstoffzwischenlagen ist wegen besserer Abschirmung gegen stark erwärmter Luft angezeigt, aber nicht gezeichnet. Die Fig. 21g, 21h und 21j zeigen andere Formen abgehängter Decken unter Mitverwendung von Schichtelementen und möglichen Abluft-Filterkonstruktionen (9).

Fig. 21i stellt eine Wärmedämmschicht mit eingeformten Luftkanälen, bzw. zwei mit Vertiefungen versehene und verklebte Dämmstofftafeln dar. Lufteinschlüssen sind nicht angestrebt, denn es entsteht Stauwärme, welche nicht entweichen kann. Die Entlüftung nach Fig. 21i mit waagrechten Luftkanälen muss seitlich offen sein, oder wie in Fig.21k' von unten nach oben verlaufen. Andere Einformungen wie in Fig, 21l dargestellt erfüllen den gleichen Zweck. Je nach Wärmebelastung, bzw. befürchtetem Wärmeverlust können die Luftkanäle weiter nach innen oder nach aussen angeordnet werden.

Fig. 21m stellt eine andere Bauweise mit Mehrfach-Wechsellagen aus hochglänzenden Reflexionsfolien mit Dämmstoffzwischenlagen (12) verschiedener Ausführung dar, welche auf einer beidseitig wellenförmigen Dämmstoffschicht aufgebracht ist. Durch die Wellenform kann zwischen den verbleibenden Luftzwischenräumen sowohl eine Be- als auch Entlüftung erfolgen. Sollte es ratsam sein, kann die Mehrfachwechsellage aus hochglänzenden Reflexionsfolien mit Dämmstoffzwischenlage (12) auch auf der Unterseite der Dämmstoffschicht aufgebracht sein.

Die Fig. 21n bis 21r zeigen verschiedene Dachformen, bei denen zwischen der Decke des obersten Obergeschosses und der Dacheindeckung ein Zwischenraum belassen ist. Die Überstände der Dächer und die Luftzwischenräume sind geeignet, durch Nutzung regelmässiger Windbewegungen die direkte Sonneneinstrahlung abzumildern.

In der Fig. 26 ist das Schema einer Wärmekabine, bzw. eines Wärmespeichergewölbes dargestellt, dessen Boden, Decke und Wände gut gegen Wärmeverluste geschützt sind und eine Schüttung aus Blähtonkörnern (2j') vorzugsweise mittlerer bis hoher Gewichtsklasse im unteren Wandbereich und unter Sitz- und Liegeflächen erhalten, welche durch die Luftkanäle (4a) mit Warmluft beschickt werden, und durch die Ansaugöffnungen (4h) des Luftkanals (4a) unter der Decke abgesaugt werden kann. Die Fig. 26a und 26b zeigen jeweils eine Detaildarstellung des Wärmeschutzes.

Fig. 27a zeigt den Schnitt durch eine Stell- Trenn- bzw. Leichtbauwand für Wohnungen, Büros, Container, Messe- und Ausstellingsräume mit beliebiger Ausstattung für besseres Innenklima. Der Aufbau wird sich nach der jeweilig vorgesehenen Klimazone richten und kann bei sehr hohen Kälte- wie Hitzebelastungen auch mit innerer Temperatursteuerung mittels erwärmter, bzw. gekühlter Luft ausgestattet werden. Für Wandelgänge, Kureinrichtungen, Foyers eignet sich diese Bauweise besonders gut, weil zu kalte oder zu warme Wände vermeidbar werden.

In ähnlicher Weise mit Diffusoren (3a) werden Baldachine, nach Fig. 27b aber auch hochbelastete Räume wie Konferenzsäle, Messe- und Ausstellungsräume in denen zwischen den üblichen Decken mit Entlüftung und Arbeitsbereich Diffusoren (3a) montiert werden, welche in umgekehrter Arbeitsweise aufsteigende Warmluft mit leicht erhöhtem Unterdruck ansaugen und ableiten, um Höchstbelastungen nicht aufkommen zu lassen. Eine derartige Anordnung zeigt Fig. 28d. Die Fig. 28a zeigt einen Schnitt durch einen Orchestergraben mit dem Ausströmkörper (11e) durch den mit geringem Überdruck über den Luftkanal (4a) Luft zugeführt werden kann. Aus den stufenartig gebildeten Musikerplätzen wird durch die Luftauslässe (11d) die im Luftkanal (4a)zugeleitete Luft mit geringer Geschwindigkeit ausgeblasen und sorgt für die erwünschte Belüftung. In der rechts davon dargestellten Wandkonstruktion (28') lässt sich im Luftstrom aus dem Luftkanal (4a) zu den Luftabsaugöffnungen (4h) durch steuerbaren Druck die verbrauchte Luft absaugen. Die Fig. 28b und 28c zeigt eine zusätzliche Ausführung zur Entlüftung, in der die Luftzwischenräume (4) gleichzeitig als Luftkanäle ausgebildet sein können. Fig. 28d zeigt die Möglichkeiten zur Ausstattung von Konferenzzimmern, Foyers, Empfangsräumen und ähnlichen Räumen. Durch die Ausströmkörper (11), bzw. (11e) sickert die temperaturgerecht gewählte Luft ein; die Wände sind optimal mit Schichtelementen nach Fig. (3k) ausgestattet; durch die in der Raummitte gezeigte Luftausströmeinrichtung (11') kann beispielsweise zusätzlich Luft eingeblasen werden, die bei sehr hoher Wärmebelastung durch die Anordnung von Diffusoren (3a) abgesaugt, oder kühle Luft eingeblasen werden kann und über die teilabgehängte Decke durch den Filter (9) und eine Deckenausstattung nach Fig 3p' eine sehr hohe Komfortstufe erreicht wird. Zur Reinhaltung der Abluftkanäle ist der Einbau von Abluftfiltern dringend geboten, um Verunreinigungen auszuschliessen.

Fig. 29 zeigt den Schnitt durch eine Terrasse, und in ähnlicher Gestaltung eines Wintergartens, zur zeitlich verlängerten Nutzung und der Aufenthaltsverbesserung durch Verwendung geeigneter Schichtelemente. Die Dampfdiffusionssperre (1p") trennt eine Wand von der Wärmedämmschicht (2) und der Mehrfach-Wechsel lage aus hochglänzenden Reflexionsfolien mit Dämmstoffzwischenlagen und dem Wärmespeicherelement (19). Davor ist der Diffusor (3a) mit Abstand als Luftzwischenraum angeordnet. Er ist vom Boden mit der Unterlage (29a) leicht abgehoben, damit Luft angesaugt werden kann, welche widerum Wärme aus dem Wärmespeicherelement oder dem Heizkörper (33) aufnehmen und durch den Diffusor nach aussen sickern kann. Die Wärmedämmschicht (2) ist nur als Abdeckung gedacht und lässt sich zur Aufheizung des Wärmespeicherelements abnehmen. Unter dem gestrichelt angedeuteten Dach, bzw. einer Markise lässt sich die Sonneneinstrahlung regulieren und während der Abendstunden der Wärmeverlust durch Abstrahlung verringern.

Mit Fig. 30 ist ein Gewächshaus skizziert, welches gleichfalls wandseitig mit Luftkanälen (4a) zur Warmluftzufuhr ausgestattet ist und gegen das Erdreich mit einer Schüttung aus Blähglas (2h) gegen Bodenkälte geschützt wird. Die Wände werden mit Schichtelementen nach Fig. 3c, 3d oder 3j verkleidet um die vorhandenen Pflanzen gegen Kälte aus dem Mauerwerk zu schützen. Das Wäremspeicherelement 19 sorgt für anhaltende mässige Wärme während kühlen Nächten und kann durch den Heizkörper (33) unterstützt werden.

Fig. 31 zeigt den Schnitt durch einen fortschrittlich entwickelten Kachel- bzw. Heissluftofen. Die Zuluft wird wahlweise durch die Luftkanäle (4a) von oben oder vom benachbarten Raum unten je nach Stellung des Dreiwegehahns (31g) angesaugt. dem Rost (31a) und weiter dem Brennraum(31b) zugeführt. Schnell kann mittels der Kombination aus Ventilator, Luftdurchlass, Heissluft- und Rückschlagsperre (31f) schon beim Anfeuern Luft in die Heizschlange/Heizspirale (31e) eingeblasen, erwärmt und den Diffusoren (3a) zugeführt werden.

Mit dieser neuen Bauweise wird die ursprünglich kalte Zuluft in Bodennähe vermieden und an deren Stelle Warmluft regelbar in den Raum eingeblasen. Durch den Kaminstutzen (4a") wird das Abgas zum Kamin geleitet. Ist der dazugehörige Wohnbereich ordnungsgemäss mit der beschriebenen Technik ausgestattet, ist der Kachel- bzw. Heissluftofen ausreichend, eine Wohnung/ein Wohnhaus vollständig zu beheizen, und eine fortgeschrittene Anwendung zur Kühlung an heissen Tagen beitragen kann. Ein Kachel- bzw. Heissluftofen besteht aus einer beachtlichen Masse mit eigenem Wärmespeichervermögen, das durch nächtliche Abkühlung oder mittels zugänglichem kalten Fliesswasser bzw. Bodenkälte eine ausreichend kühle Reserve bildet, welche zur Absenkung sommerlicher Lufttemperaturen nutzbar gemacht werden kann.

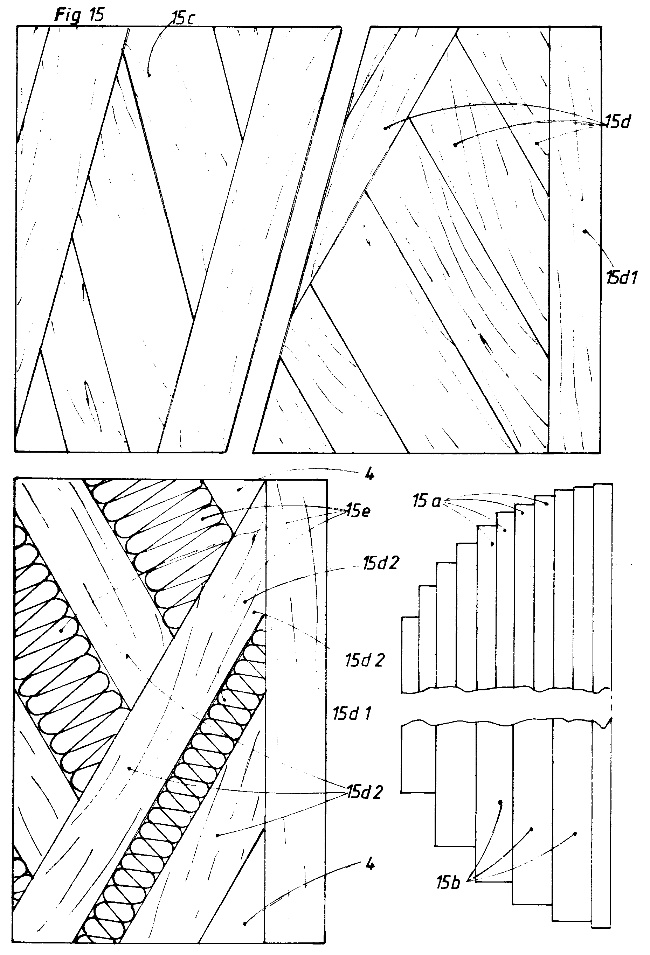

Fig. 15 stellt die Verwertung von Hölzern dar, welche in der Regel nicht genutzt werden. Dünne Stämme und solche nach Verbiss, Windbruch und dergleichen Schaden lassen sich zu Dünnbrettern verarbeiten und anschliessend durch nutzungsgerechte Weiterbehandlung verwenden. Ganz besonders vorteilhaft erweisen sich Verleimungen mit Luftzwischenräumen, welche in dieser Weise belassen bleiben oder mit Dämmstoffen aufzufüllen sind, um wärmetechniche Vorteile zu bieten. Fig. 15a zeigt die hohe Ausbeute bei der Trennung von Dünnstämmen. Selbst nach Fig. 15b ist der Masseverlust sehr gering. Fig. 15c mit geringer Schenkelspreizung ist eher als Konstruktionsholz verwendbar als nach 15c' mit weiterer Schenkelspreizung, welche näher an Eigenschaften von Sperrholz heranreichen. Werden zusätzlich längs verlaufende Dünnbretter (15d1) verwendet erhöht sich die Längsstabilität, bzw. können danach auch Furniere zur Weiterverarbeitung aufgeleimt werden.

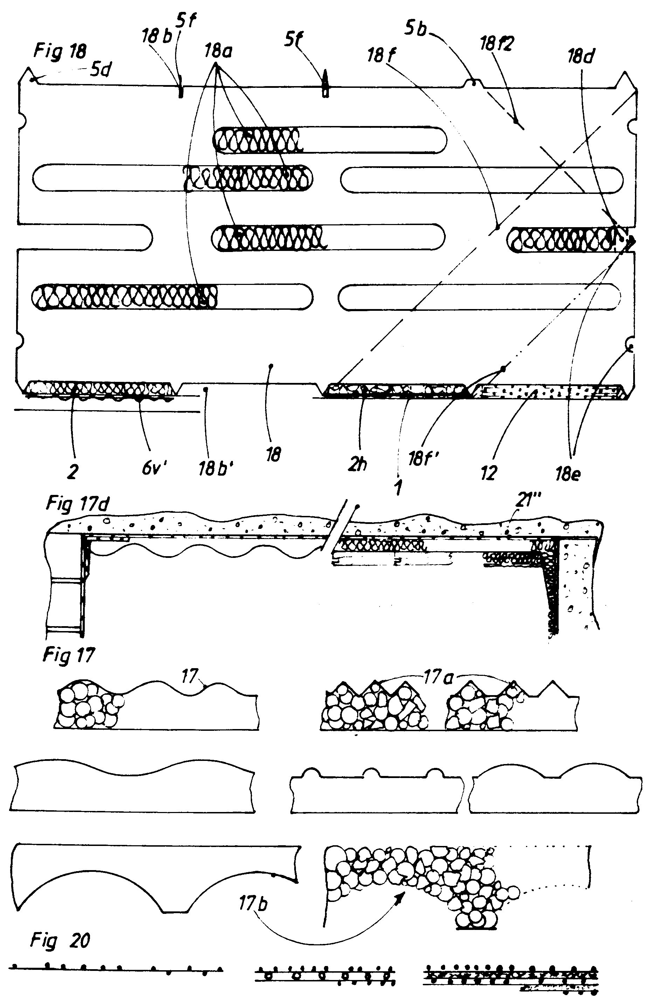

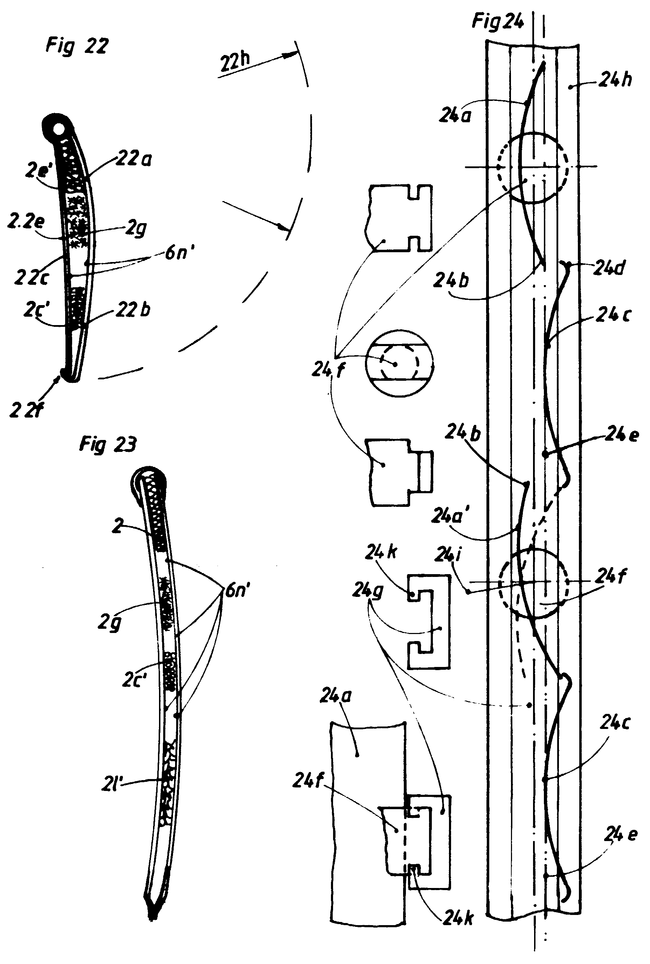

In Fig. 18 ist ein Klimaschutzstein dargestellt, welcher durch versetzte Luftkammern (18a) mit Füllungen aus neuen oder regenerierten Dämmstoffen mit einer gut reflektierenden Umhüllung ausgestattet sind. Die Füllungen verhindern die innere Wärmestrahlung so wirkungsvoll, dass sich diese Steingestaltung im Zusammenwirken mit dem durch versetzte Luftkammern der Wärmetransmissionsweg fast verdoppelt. In einfacher Einformung von Abstandhaltern in den Figurationen (5a) und (5b) mit der Option zu beliebiger Grösse oder Vertiefungen (18b) und Einfügen von Abstandhaltern (5f) wird für die Verarbeitung an der Baustelle oder werksseitig zu Fertigwänden eine grosse Erleichterung geschaffen, indem die Voraussetzungen zur Weiterführung der Bauarbeiten bereits vorhanden sind. In gleicher Weise dienen die Vertiefungen (18b'), in die je nach lokalen Klimabedingungen Dämmstoffe beliebiger Art und Eignung, eingeformt werden. Es können normale Dämmstoffschichten(2) sein, mit beispielsweise Stoff- oder bedruckten Glasfasertapeten, die erfahrungsgemäss weniger wärmewirksam sind, Wärmedämmeinlagen aus Blähglas (2h) mit einer Dampfdiffusionssperre (1) oder einer Mehrfach-Wechsellage aus hochglänzenden Reflexionsfolien mit Dämmstoffzwischenlagen (12) sein. Selbstverständlich lassen sich die nach den Fig. 7a bis 7g beschriebenen Sonnenabschirmungen einbeziehen. (18e) stellt Mörteltaschen dar, welche dem Mauergefüge dienen. Die gestrichelt gezeichneten Trennlinien (18f) und (18f') zeigen die Möglichkeit, bereits bei der Herstellung von Klimaschutzsteinen Steine verfügbar zu haben, welche zur Eckvermauerung verwendet werden können. Die Figurenreihe 17 zeigt zusätzlich mögliche Formgebungen von Schichtelementen, welche dazu dienen erwünschte optische oder zweckmässige Verarbeitung zuzulassen von denen wellenförmige (17), waffelförmige (17a) und sphärische (17b) Gestaltung beachtliche Vorteile bieten. Fig. 17d zeigt ein Beispiel für Eckenausbildung in Deckennähe zur Verhinderung von Durchfeuchtung, indem verstärkte Dampfdiffusionssperren (1), bzw. Dämmstoffkeile (2) zusätzlichen Schutz bieten.

Die Figurenreihe 20 zeigt der Reihe nach einseitige und mehrseitige Verklebung von Dämmstoffpartikeln, zwei- drei und vierlagige Verklebungen, wie sie für die unterschiedlichsten Belastungsstufen verwendet werden können.

**Patentansprüche**

1. Verfahren und Schichtelemente zur thermischen und körperorientierten Beherrschung und Steuerung des Innenklimas in Gebäuden und Verkehrsmitteln, besonders in kleinen bis mittelgrossen Räumen dadurch gekennzeichnet,
dass Arbeitsweisen und Wirkungen darauf ausgerichtet werden, in geschlossenen Räumen Aufenthaltsbedingungen zu erzeugen, die unabhängig von Standort, Tages- und Jahresabläufen, Alter, Bauweise, und Belastungen durch äussere und innere Einflüsse zu körperkonformen Aufenthaltsbedingungen führen, welche die alleinige Konstante Mensch, mit seiner auf +37° Celsius fixierten Körpertemperatur als ständig vorrangige Orientierung zum Ausgleich der thermischen Unausgewogenheit zwischen Bausubstanz, und der jeweiligen Raumluft durch optimierte Annäherung an das ideale atmosphärische Verhältnis Luft/Mensch herbeiführen.

2. Verfahren und Schichtelemente nach Anspruch
1, dadurch gekennzeichnet,
dass eine auf alle Wärmeeinflüsse beziehbare Trennung zwischen der, der Atmosphäre und anderen Massen ausgesetzte tragende und nichttragende Bausubstanz und der von ihr umgebenen Raumluft innerhalb von Gebäuden, Räumen und Transportmitteln fast lückenlos bis zur körperlich vertretbaren Entlastung in der betroffenen Klimazone hergestellt und aufrecht erhalten, nach Belieben änderbar wird, damit unerwünschte Einflüsse des Aussenklimas und der gebäudeinternen, bez. transportmittelinternen Wärmebewegung neutralisiert werden, dadurch die thermischen und wärmeisolierenden Eigenschaften von Luft gegenüber dem menschlichen Körper als einzige hochempfindliche Konstante einzustufen ist, in Wände, Decken und andere massive Baukörper und Einrichtungen fortgesetzt, die thermischen Belastungen der Bausubstanz fernhalten, ohne zu einem originären Dämmstoff zu werden, um mit geringem Aufwand kühlender oder wärmender Zuluft aber auch anderer Wärme- bzw. Kühleinrichtungen mit Zuhilfenahme von geeigneten Wärmedämmstoffen, Kombinationen von Dämmstoffen und Mehrfach-Wechsellagen aus hochreflektierenden dünnen und gelegeverstärkten Reflexionsfolien, Ausbildung von Luftzwischenräumen mit Dämmstoff- oder Aerogeleinlagen und Verwendung von Schichtelementen, welche in unterschiedlicher Form, Grösse, Zusammensetzung, thermischem Verhalten, Luftdurchlässigkeit, Ausformung und Festigkeit zur Innen- und Aussenmontage und Abstimmung auf erforderlich werdende Einsatzarten und Klimazonen jede gewünschte Bedingung zur optimalen Bestimmung des Innenklimas erfüllen.

3. Verfahren und Schichtelemente nach den Ansprüchen
1 und 2, dadurch gekennzeichnet,
dass ein an den lokalen Bedingungen orientierter Verbund aus Wärmedämmung, Wärmereflexion, Wärmetransmission, Wärmeabweisung und sofern erforderlich eine Wärmespeicherung, Wärmestrahlung und Wärmeabsorption eintritt, bzw. herbeigeführt wird, welche nach Temperaturmessungen über einen ausreichend langen Zeitraum

EP 0 919 673 A2

die Einzelbedingungen für die einzelnen Bauteile ergibt, damit die thermischen Wirkungen gewünschter Raumluftbedingungen allein mit Zufuhr erwärmter bzw. gekühlter Luft einschliesslich Mischungen daraus, nach sorgfältiger Aufbereitung nach EP 0743 494 A2 mit bedarfsgesteuerten Luftvolumina zur Verminderung bis Aufhebung gegenwärtiger Unzulänglichkeiten von Klimaeinrichtungen beiträgt.

4. Verfahren und Schichtelemente nach den Ansprüchen
1 bis 3, dadurch gekennzeichnet,
dass auf Aussenwänden von Gebäuden, auf und unter Dächern und in Kellerräumen Schichtelemente zur Abwehr grosser Temperaturunterschiede montiert werden, deren äussere Schichtungen wärmestrahlungsreflektierend ausgebildet, innerhalb von Schichtelementen Luftkanäle eingeformt sein können, diese mit Einblasungen, bzw. Schüttungen aus Blähmineralien, Aerogelen, lokal verfügbaren organischen Substanzen und Mischungen daraus eingebracht, vermörtelt oder verklebt sein können, bzw. Hohlräume damit verfüllt werden um Auskühlungen oder Aufheizungen der statisch bedingten Bausubstanz ausreichend zu reduzieren und nach lokalen Bedingungen wahlweise die Luftdurchlässigkeit verstärkt oder vermindert sein kann, damit z. B. Wärme leichter entweichen kann, bzw. abgewehrt wird.

5. Verfahren und Schichtelemente nach den Ansprüchen
1 bis 4, dadurch gekennzeichnet,
dass Schichtelemente auch als konstruktive Baustoffe oder Bauteile Verwendung finden bei der Ausstattung von Heizwänden, Hypokaustenwänden, bzw. Durchströmhypokausten, als Warmluft- bzw. Kaltluftauslässe, einfache oder kombinierte Strahlungs-/Lüftungskörper in Wände, Teile von Wänden, Säulen, Nischen oder ähnliche Flächen von Empfangsräumen, Dielen, Sälen, Kindergärten, Schulen, Universitäten, Theatern, Orchestergräben, Foyers, Wandelhallen, Kureinrichtungen, Museen und ähnlichen Räumen eingesetzt werden, um Belastungen durch beliebige Wärmequellen auszugleichen und zur Regelung der Raumlufttemperatur ausgerüstet werden, damit aufbereitete Frischluft einsickern und in den betreffenden Räumen durch Verdrängungslüftung in Gegenrichtung zur jeweiligen Belastung jederzeit erwünschtes Innenklima vermittelt wird.

6. Verfahren und Schichtelemente nach den Ansprüchen
1 bis 5, dadurch gekennzeichnet,
dass in Räumen mit Kachelofenbetrieb, offenen und geschlossenen Kaminen, Heissluftöfen und verwandten Heizeinrichtungen nach Montage von Schichtelementen anfallender Wärmeüberschuss anderen Räumen zugeleitet werden kann, anstelle von Warmluftöffnungen, bzw. Warmluftgittern aus Metallen und üblichen keramischen Massen fein- bis grobkörnige luftdurchlässige Schichtelemente mit Luftschiebern versehen werden, die in den betreffenden Raum einströmende Warmluft und bei Umstellung auf Kühlung, dann Kaltluft in eine diffuse Strömung versetzen und bei Verwendung hochspeicherfähiger Zuschläge, wie Kies oder Splitt oder ein Gemisch daraus bestehend aus Speckstein, Quarz, Marmor oder ähnlich schwere Mineralien angenehme Wärmestrahlung erzeugt werden kann und an heissen bis sehr heissen Tagen derartige Luftauslässe beliebig als Kaltluftauslässe dienen.

7. Verfahren und Schichtelemente nach den Ansprüchen
1 bis 6, dadurch gekennzeichnet,
dass Schichtelemente in Trenn- oder Stellwände, Einzelräume, Kabinen, Bau- Büro- oder Wohncontainer, Raumteiler, oder Teile davon, in Baldachine, Ausstellungs- und Messestände und ähnliche Einrichtungen nach individueller Wahl der Be- und Entlüftung, Lufttemperaturbestimmung und Luftwechsel raten eingebaut, bzw. montiert oder raumintern in Gehäuse eingebettet oder mobil aufgestellt werden können.

8. Verfahren und Schichtelemente nach den Ansprüchen
1 bis 7, dadurch gekennzeichnet,
dass in Transport- und Verkehrsmittel zur Verbesserung der Belüftung, Bestimmung der Lufttemperaturen und Luftwechselraten Schichtelemente in Armaturenbretter, Rückenlehnen und Sitze, Seiten- und Rückwände, Dachkonstruktionen und Konsolen in angepasster Ausformung als Diffusoren oder ausgebildet als kissenartige Monolagen- oder Mehrfachlagenkissen mit steuerbarer Luftvolumenzufuhr zur körperlichen Entlastung von Fahrern, Personal und Fahrgästen eingebaut und betrieben werden, deren Füllungen in ein- oder beidseitigen gut luftdurchlässigen Bezügen aus Textilien, Leder, Fell oder geeignetem Kunststoff bestehen können.

9. Verfahren und Schichtelemente nach den Ansprüchen
1 bis 8, dadurch gekennzeichnet,
dass besonders hergerichtete Wärmekabinen oder Wärmespeicher gewölbe nach sehr wirksamer thermischer Trennung gegenüber der Bausubstanz mit Schichtelementen hohen Wärmestrahlungspotentials ausgestattet werden, um Personen mit temporär erhöhtem Wärmebedarf, auch aus medizinischen Gründen, die Möglichkeit zur Erholung, bzw. Wiederherstellung normalen Befindens oder der Wärmetherapie dienen kann, indem sehr warme Luft eingespeist wird.

10. Verfahren und Schichtelemente nach den Ansprüchen 1 bis 9, dadurch gekennzeichnet, dass zur Reinhaltung des Abluftsystems und zur Vermeidung des Befalls, der Nestbildung und Brutmöglichkeit durch Insekten die Luftdurchlässe ins Abluftsystem mit Graphitpulver behandelt, Einfach-Einmalfilter eingebaut werden, welche aus einer dichtschliessenden Umhüllung aus beliebigem verfestigtem/steifen Material bestehen können, ins Abluftsystem integrierbar geformt sind und mit luftdurchlässigen Füllungen aus versteiften Altpapierstreifen, Altfasern, Gräsern, Holzwolle oder ähnlich geeignetem Material, bzw. Mischungen daraus bestehen und mit einem Dauerhaftkleber beschichtet in der Lage sind, Schwebstoffe, Staub, Krankheitskeime, Insekten, Pollen und andere Verunreinigungen festzuhalten, um durch regelmässigen Austausch und Entsorgung denkbare dauerhafte Verunreinigungen des Abluftsystems und nachgeordneter Aggregate zu verhindern.

11. Verfahren und Schichtelemente nach den Ansprüchen 1 bis 10, dadurch gekennzeichnet, dass zur Abwehr starker bis extremer Hitzebelastungen eine äussere luft- und wasserdichte Schichtung aus geeigneten Zwei- oder Mehrkomponentenkunststoffen wie z. B. Polyester, Faserzementstoffen oder anderen wetterbeständigen Fassadenbaustoffen, auch aus Kombinationen unter Verwendung leichter Blähmineralien, welche nach Beimischung von Aluminiumpulver, Aluminiumfolienflocken oder anderer reflektierender Beimischungen oder Aufträgen zur Reflexion starker Sonneneinstrahlung und hoher Lufttemperaturen beiträgt, eingeformte Be- und Entlüftungskanäle hitzeabwehrend wirken, gereinigt werden können, in einer tieferen Schichtung ein- oder mehrlagigen Reflexions-Zwischenlagen und üblich verfestigten Dämmstoffen, bzw. Aerogeleinlagen bestehend als Hitzeschilde gegenüber Sonneneinstrahlung und der heissen Atmosphäre dienen und in ähnlich wirkender Schichtung auf den Rauminnenseiten zugeführte Kühlung der Raumluft erhalten bleibt.

12. Verfahren und Schichtelemente nach Ansprüchen 1 bis 11, dadurch gekennzeichnet, dass sie als Klimaschutzsteine ausgebildet werden, indem sie aus Haufwerkbeton mit sehr hohem Anteil Blähton und Blähglas bestehen, mindestens drei in Längsrichtung gegeneinander versetzte Luftkammern mit Füllungen aus neuen oder regenerierten Dämmstoffen mit einer gut reflektierenden Umhüllung ausgestattet werden und deren Längsseiten beidseitig Vertiefungen über ca. 95 Prozent der Gesamtlänge erhalten, in welche jeweils eine Dämmstofflage eingebettet werden kann, deren Stärke an den thermischen Belastungen am Verwendungsort zu bemessen ist und als Haftgrundlage für Verputz ein Glasfasergitter aufgespannt werden kann.

13. Verfahren und Schichtelemente nach den Ansprüchen 1 bis 12, dadurch gekennzeichnet, dass es als durchbrochenes Vormauerwerk ausgebildet, oder dünnwandiger Sonnenschutz-Gitterstein verarbeitet wird, um direkte Sonneneinstrahlung auf das tragende Mauerwerk zu verhindern und mit Ausnahme der sehr kurzen Sonnenauf- und -untergangsperioden in heissen und sehr heissen Regionen die Sonneneinstrahlung durch Bautiefe, Schrägstellung reflektierende Beschichtung und minimiertes Gewicht intensive Sonneneinstrahlung auf das tragende Mauerwerk, bzw. anderweitig gestaltete Gebäudehülle einzuschränken, mit oder ohne Mehrfachwechsel-Lagen aus dünnen reflektierenden und gelegeverstärkten Reflexionsfolien und dünnen Dämmstoffschichten vor Überhitzung schützt, in einem Luftzwischenraum erhitzte Luft nach oben steigen kann, und in Dachnähe ins Freie gelangt.

14. Verfahren und Schichtelemente nach den Ansprüchen 1 bis 13, dadurch gekennzeichnet, dass zur Vermeidung der sehr hohen Wärmebelastung unter Dächern, insbesondere Warmdächern diese durch wärmeabweisende bzw. wärmereflektierende Zwischenschichten aus Mehrfach-Wechsellagen mit hochglänzenden dünnen und gelegeverstärkten Reflexionsfolien auch im Verbund mit Dämmstoffeinlagen und gut luftdurchlässigen Schichtelementen kombiniert werden, und gezielt mittels Luftzwischenräumen eine Entlüftung zur Vermeidung von Stauwärme beiträgt, unter Beton- und Ziegeldächern eine wirksame Entlüftung vorgesehen wird, damit reflektierte Wärme entweichen kann und andererseits aus genutzten Räumen während der kühlen und kalten Jahreszeiten die Wärmeabstrahlung verringert wird, gegebenenfalls Wärmespeicherkörper in ungenutzten Dachräumen im Sommer Wärme aufnehmen, welche durch sporadische oder kontinuierliche Luftbewegung einem Wärmespeicher oder einer Wärmerückgewinnung zugeführt wird und zur Vermeidung zu hohen Wärmeverlusts aus dem obersten Geschoss auf dem Dachboden eine nach unten wirkende Reflexions- und Wärmedämmschicht aufgebracht wird.

**15.** Verfahren und Schichtelemente nach den Ansprüchen 1 bis 14, dadurch gekennzeichnet, dass sie zur Ausstattung von Decken, besonders aber Stahlbetondecken in gesteigerter Weise gegen Wärmetransmission und Wärmeabsorption von der Raumluft getrennt werden müssen, indem sie vorzugsweise mit sehr wirksamen Mehrfach-Wechsellagen mit hochglänzenden Reflexionsfolien und Dämmstoffzwischenlagen und sehr leichten Schichtelementen ausgestattet werden, in vorteilhafter Weise eine zusätzliche volle oder teilabgehängte Decke erhalten, welche ganz oder in Teilen der Entlüftung dienen kann, bzw. hohe und sehr hohe Wärmebelastungen abbaut oder in Form von Kassettendecken montagefertig hergestellt werden, sich reinigen lassen, offene und geschlossene Luftzwischenräume vorgesehen sein können und die Anschlüsse zu Wandflächen sorgfältigst dampfdiffusionsdicht ausgeführt werden.

**16.** Verfahren und Schichtelemente nach den Ansprüchen 1 bis 15, dadurch gekennzeichnet, dass sie aus ausreichend harten, widerstandsfähigen und wärmespeichernden Blähmineralien, Kies oder Gesteinsbruch oder Mischungen daraus bestehen können, bodenseitig sphärisch, noppen-, waffel-, oder wellenartig geformt ein- oder mehrseitig einen vollwandigen Rand aufweisen und auf der Oberseite mit einem beliebigen strapazierfähigen überzug versehen, sich als Fussbodenstein verlegen und vermauern lassen, dabei besonders gut zur Ausstattung von Veranden, geschlossenen Balkonen, Wintergärten, Terrassen, Therapieräumen und ähnlichen Räumen geeignet sind, in anderer Bauweise durch Vermauern zu einem wandmontierten bzw. freistehenden Luftausströmkörper/Raumteiler mit eingebauter Luftführung und Luftregelung ein kombinierter Luftheiz- oder Luftkühlkörper sein kann und bei Verwendung luftdurchlässiger Schichtelemente als Lüftungskörper dienen können.

**17.** Verfahren und Schichtelemente nach den Ansprüchen 1, bis 16, dadurch gekennzeichnet, dass in alten Häusern, feuchten Kellern und Untergeschossen ebenso wie in Feuchtgebieten, an Flussläufen, in Niederungen, an Kältepolen, in Küstennähe, auf Inseln und im Gebirge eine höhere Feuchtebelastung auftritt, welche sich vorwiegend auf den Innenwänden bemerkbar macht, Bauschäden verursacht und der Gesundheit abträglich ist, nicht immer mit Entfeuchtungsverfahren begegnet werden kann, deshalb eine Dampfdiffusionssperre nur nach sorgfältiger Prüfung vor Schäden helfen wird, aber starke Schichtelemente, welche mit Aufträgen aus entgastem Bitumen, Siliconen oder Parafinen die sicherste Vorkehrung zur konsequenten Hinterlüftung mit vorzugsweise getrockneter Luft ist.

**18.** Verfahren und Schichtelemente nach den Ansprüchen 1 bis 17, dadurch gekennzeichnet, dass sie auf Gebäudeaussen- und -innenwänden mit üblichem Verputz aufgebracht sind, welcher aus gut haftender Bewurfs- oder Spritzschicht mit Zuschlägen aus leichten bis sehr leichten Blähmineralien bestehen, die sich durch hohen Anteil von Lufteinschlüssen als eine Art Wärmedämmschicht bewähren, indem sie in einem Arbeitsgang aufgetragen werden oder als Baufertigteile/Verputzelemente mit minimalem Anteil an Verputzmasse, bzw. Verputzbindemitteln, auch aus Anteilen von Gasbeton, Porenbeton oder Gipsfasermaterial bestehen können, in dieser Verarbeitungsweise zum festen Bestandteil der Bausubstanz werden und soweit erforderlich mit zusätzlichen Mehrfachwechsellagen aus Reflexionsfolien und Dämmstoffzwischenlagen ausgerüstet werden können, unter Schindeln, Fassadenfertigteilen oder Täfelungen aufgebracht, in Füllungen von Fachwerkhäusern eingearbeitet werden und zur Verbesserung der Stabilität mit geeigneten Natur- oder Kunstfasern oder Gemischen daraus in Neubauten wie für Renovierungen, Sanierungen und besonders für Wärmedämmarbeiten zu besten Ergebnissen führen, indem sie zugleich eine thermische Trennung herbeiführend besten Wärmeschutz bieten.

**19.** Verfahren und Schichtelemente nach den Ansprüchen 1 bis 18, dadurch gekennzeichnet, dass sie aus geeigneten leichten Nadel- oder Laubhölzern, welche aus Dünnstämmen, Windbruch, Verbiss oder Fehlwuchs bestehen können, nach Fällen, Trennen, Sägen oder Schälen und Säumen zu Dünnbrettern möglichst nach Wässern oder Flössen und fachgerechtem Trocknen zu zwei- oder mehrlagigen Endlosbrettern, -leisten, -täfelungen, Konstruktions- oder Möbelhölzern mit oder ohne Luftzwischenräumen, in die unbrennbare Dämmstoffe zusammen mit Reflexionsfolien eingebettet sein können, auf den Aussenlagen dicht aneinanderliegend wasser- und feuchtefest verleimt werden und deren durchschnittliche Faserrichtung ein X mit einer jeweils an vorvorteilhaftester Nutzung orientierter Schenkelspreizung ergibt, durch fortlaufende Aneinanderreihung zu Endloskörpern, bzw. Endlostafeln werden, welche sich nach gewünschtem Zuschnitt zu Täfelungen, Brettern, Konstruktionshölzern, Tafeln, Füllungen, Rahmen, Trenn- und Stellwänden, Möbelteilen, mit Fräsungen bzw. Bohrungen als Luftdiffusoren und anderen Zwecken als hochwertige und sehr gut wärmedämmende Holzprodukte verwenden lassen.

**20.** Verfahren und Schichtelemente nach den Ansprüchen
1 bis 19, dadurch gekennzeichnet,
dass sie aus originären Wand- und Deckenbaustoffen bestehen können, aber in ihrer bisherigen Grundstruktur dahingehend verändert werden, dass ihnen vorwiegend in einer wandnahen, mittleren, oder raumnahen Schicht, aber auch in ihrer Einheitlichkeit in wirksam messbar ausreichenden Mengen kornförmige Dämmstoffe wie Perlite Blähton, Blähglas, Blähschiefer, aber auch Anteile von Aerogelen und organische Dämmstoffe oder Gemischen daraus eingefügt werden, um als wärmedämmende Wand- Zwischenwand- und Deckenbaustoffe, Kassettenelemente und entsprechende Bauteile gezielt nach ihrem spezifischen Wärmeverhalten, wahlweise eher wärmespeichernd oder wärmeabsorbierend gegenüber dem menschlichen Körper spürbar zu werden oder in anderer Form aus grobkörnigen schweren Blähmineralien verklebt oder leicht vermörtelt gut luftdurchlässig zu starken Tafeln verarbeitet temporär Wärmespeicher in Wohn- und Aufenthaltsräumen zu sein oder in Wintergärten, auf Terrassen, in Wandelgängen und ähnlichen Anlagen über einen berechenbaren Zeitraum Wärme aus Sonneneinstrahlung aufzunehmen, zu speichern und nach Abkühlung der Raumluft an diese wieder abzugeben.

**21.** Verfahren und Schichtelemente nach den Ansprüchen
1 bis 20, dadurch gekennzeichnet,
dass sie in ihrer raumseitigen Oberfäche eine dünne bis sehr dünne Deckschicht aus Mischungen von Feinsand, Schluff, Ton, Lehm, Bimssand, anderen Leichtmineralien, vorzugsweise feinkörnigem Blähton und Blähglas, Perlite, und anderen Blähmineralien, Holz-, Rinden-, oder Korkmehl und Kurzfasern besteht, welche sich gut mit geringfügigen Beimengungen aus Gips oder Feinkalk und chlorfreien chemischen Bindemitteln wie Polyvinylalkohol, Vinylacetat-Ethylen, Styrolacrylsäureester, auch verträglichen Mischungen daraus und härtenden Zugaben von Melaminharzen, Magnesitmilch und Zementleim zu Paste verarbeitet auf Schichtelemente kalandert einen glatten und beanspruchbaren Auftrag ergeben, wobei das Mischungsverhältnis der jeweiligen Mischung einen pH-Wert zwischen 6,5 und maximal 7,0 ergeben soll und der mineralische Anteil die Unbrennbarkeit bedingen muss und wandseitig wellen- waffel- oder sphärische und andere Einformungen den Luftanteil erhöhen und gleichzeitig zum Unterbau Abstandhalter sein können.

**22.** Schichtelemente nach den Ansprüchen
1 bis 21, dadurch gekennzeichnet,
dass sie im Bauwesen allgemein der thermischen Trennung zwischen der massiven, stark wärmespeicherfähigen, wärmetransmittierenden, wärmestrahlenden und wärmeabsorbierenden Bausubstanz, wie Beton, Kunststein, Mauerwerk und Verputz als raumsparende Mehrfach- Wechsellagen aus gelegeverstärkten dünnen Reflexionsfolien, Einlagen aus waffelartig geprägten Kunststoffschaumfolien/Kunststoffolien/Glasfasereinlagen mit oder ohne Luftzwischenräumen, welche auch leicht verklebte Füllungen aus Dämmstoffpartikeln wie Perlite, Vermiculite, Aerogelen, Korkmehl/Korkschrot oder Einlagen aus hitzebeständigen Vliesen, bzw. Mischungen daraus enthalten, mit oder ohne Versteifungen verklebt, verschweisst oder anderweitig in handliche Formate gebracht, dem jeweiligen Grad der thermischen Belastung angepasst, und weitgehend berührungsfrei zwischen Bausubstanz und vorgesehenen Schichtelementen zum Klimaausgleich dienen, damit allein durch Zufuhr leicht warmer, oder kühler, bzw. einer erwünschten Mischung aus beiden Temperaturen das Innenklima optimal körperkonform, dem sick-building-syndrom entgegnet wird.

**23.** Schichtelement nach den Ansprüchen
1 bis 22, dadurch gekennzeichnet,
dass es zur Montage an und in Gebäuden und Transportmitteln bestimmt ist, vorwiegend aus natürlichen und künstlich geblähten Mineralien, Aerogelen, Gemischen und Schichtungen daraus, organischen Substanzen und Blähmassen mit sehr guten, guten bis mittelguten Wärmedämmeigenschaften, Haftfähigkeit, im Verbund mit unbrennbaren, bzw. unbrennbar gemachten Füll- und Bindemitteln in folgerichtiger Zusammensetzung, Formgebung, Schichtung, Verklebung oder Vermörtelung zu luftdurchlässigen Tafeln, Platten oder Formkörpern auch solchen zur Einbettung von Dämmstoffen und jeweilig verfügbarer pflanzlicher Trockenmassen und Mitverwendung hydraulisch abbindender Bindemittel, Fertigmörteln, natürlichen oder künstlich hergestellten Harzen, wie beispielsweise Epoxidharzen, Melaminharzen, Polyesterharzen, Kunststoffdispersionen, Leimen, Latex und Gemischen daraus, unter Beimischung von Fasern unterschiedlicher Längen gegossen, geformt, getrocknet, gehärtet, getempert und gesintert werden kann, ein- oder beidseitig mit einer Reflexionsschicht versehen und fachkundiger Weiterverarbeitung zu guter Montagefähigkeit führt, durch die unabhängig gegebener Klimabedingungen bei berechenbarer Anwendung physikalischer Gesetzmässigkeiten dazu führt, Heiz- und Kühlverluste zu reduzieren, ein Maximum an thermischer Neutralität zwischen originären Böden, Decken, Zwischendecken, Wänden, Wandteilen, Einbauten, Treppenhäusern, Licht- und Aufzugschächten, Dachräumen, Warm- und Kaltdächern, Fassaden einerseits und der Raumluft gegebener, bzw. angestrebter Temperatur andererseits bewirkt, im Verbund mit ein- oder mehrseitiger Dampfdiffusionssperren Schäden an der Bausubstanz verhindert, Einflüsse atmosphärischer Belastungen vermindert bis aufhebt, sich den thermischen Eigenschaften von Luft weitgehend annähern lässt, dadurch den Gebrauchswert von Gebäuden für Menschen, deren Arbeits- und Lebensumfeld erhöht und gleichzeitig zur drastischen Verminderung des Energieaufwands für Heizung und Kühlung beiträgt indem es bei der Ausstattung von Räumen ähnlich einem Thermosbehälter wirkt.

24. Schichtelemente nach den Ansprüchen 1 bis 23, dadurch gekennzeichnet, dass vorzugsweise walzenförmige oder konische Aussparungen in Schichtelemente eingeformt werden, die zur Befestigung auf vorbereiteten Unterbau mittels Bauklebern bzw. üblichen Bindemitteln auf analog passend geformte Konen, Zapfen, Wellen oder andere Ausformungen mit Hilfe von Schraubverbindungen oder üblicher Dübel- und Befestigungstechnik zur Reinigung, zum Austausch, zu Reparaturen oder Änderung des Betriebssystems montiert und demontiert werden können, in ihrer inneren Struktur verfestigende Einlagen, aufkalanderte bruchsichere Versteifungen erhalten, bzw. einen entsprechenden Belag und verfestigte Aussparungen zur Aufnahme von Schaltern, Steck- und Abzweigdosen, Einsätze für Wandmontagen, Telefon-, Rundfunk-, Fernseh- und andere Kommunikationsmittel und Leitungseinrichtungen eingeformt werden.

25. Schichtelemente nach den Ansprüchen 1 bis 23, dadurch gekennzeichnet, dass sie aus möglichst rundkörnigen mittelschweren bis schweren Blähmineralien, Kieseln, Feinschotter und anderen geeigneten Mineralien bestehen können, welche zu Formkörpern gestaltet der Ansaugung oder Ausblasung von Luft luftdurchlässig verklebt, hitze- und feuerfest, frostsicher vermörtelt, gehärtet, getempert, oder gesintert, beliebig belastbar verbunden sein können, als Sichtflächen bunt pigmentiert in Gehäuse eingebaut bzw, in Öffnungen eingefügt als Diffusoren, oder mit ein- oder mehrseitiger gut wärmeleitender, bzw. metallischer Beschichtung/Begrenzung als Wärmeaustauscher Verwendung finden.

26. Schichtelemente nach den Ansprüchen 1 bis 23, dadurch gekennzeichnet, dass sie mit Wellen, Rillen oder sphärischen Ausformungen besonders als steuerbare Luftleit- oder Luftansaugelemente ausgebildet werden, zum Beheizen, Kühlen, Aufnahme geeigneter Heiz- bzw. Kühlleitungen vorbereitet sind, über Wärmestrahlungseinrichtungen montierbar und vom rohen bis gebrauchsfähigen Zustand behandelt. veredelt, und montagefertig bearbeitet sind.

27. Schichtelemente nach den Ansprüchen 1 bis 23, dadurch gekennzeichnet, dass die einzelnen Schichtungen ein- oder mehrteiliger Schichtelemente auf die Bedingungen in verschiedenen Klimazonen abgestimmt, die thermische Trennung von Bausubstanz und Raumluft unterstützt bis vervollkommnet, nach Jahres- und Tageszeit eher wärmespeichernd oder wärmeabweisend, dabei gleichzeitig feuchtigkeitsabweisend ausgebildet werden um lokale Witterungseinflüsse weitgehend aufzuheben, bzw. zu neutralisieren, sodass z. B. reflektierende Beschichtungen Wärme entweder zur Raumseite oder zurück ins Mauerwerk, bzw. Dachflächen oder in die Atmosphäre abstrahlend wirken können, die Wärmetransmission durch Trennung mit wärmedämmenden und reflektierenden Zwischenschichten vermindert, eingeformte Luftzwischenräume oder Luftkanäle eine Luftbewegung erlauben und begünstigen, welche aus Räumen abgesaugte verbrauchte Raumluft einer Wärmerückgewinnung als Zuleitung dienen, bzw. Stauwärme abfliessen lassen und in vorteilhafter Weise in Form ruhender Luft das temperaturbeeinflussende Verhalten raumseitig montierter Schichtelemente dahingehend verbessern, dass der Gesamtluftanteil vergrössert wird, damit mögliche Wärmetransmissionen, Wärmstrahlung und Wärmespeicherkapazitäten vermindert und gleichzeitig Wärmeabsorptionen, bzw. Wärmestrahlung in Verbindung mit der Bausubstanz äusserst geringfügig zulassen, durch Ausformung von Nut- und Federkanten, bzw. gefalzten Kanten gute Montage gestatten, zur Herstellung von Zwischenwänden und abgehängten Decken, wärmespeichernde oder wärmereflektierende Einfärbungen erhalten und das physikalischen Gesetzen unterworfene Volumen der Luftzwischenräume mit oder ohne Dämmstoffüllungen gezielter Wirksamkeit die jeweils erwünschte Raumlufttemperatur nur mit Zufuhr leicht warmer oder kühler Luft zuverlässig bestimmt.

**28.** Schichtelement nach den Ansprüchen
1 bis 23, dadurch gekennzeichnet,
dass neben mineralischen auch organische Substanzen wie Wiederverwertungsstoffe der Holz-, Leder-, Fell-, Papier-Kokos-, Kork- und Textilindustrie, der Land- und Forstwirtschaft nach feuerhemmender Behandlung, z. B. mit Borsalzen, Graphitpulver und ählichen Substanzen Verwendung finden und zur dauerhaften Verbindung der Zuschlagstoffe neben üblichen auch schaumbildende, bzw. geschäumte Bindemittel und Mischungen daraus zur Verminderung innerer Wärmetransmissionen Verwendung finden.

**29.** Schichtelement nach den Ansprüchen
1 bis 23, dadurch gekennzeichnet,
dass es vorwiegend aus rundkörnigen Blähmineralien, aber auch aus Perlen ähnlichen Materials, Holz, oder Holzwerkstoffen und Gemischen daraus bestehen kann, welches als Formkörper zur Ausblasung von Luft dauerhaft verklebt, vermörtelt, oder anderweitig verbunden in runden, ovalen oder eckigen Gehäusen eingebaut, bzw. als Schüttung eingebracht einen Luftdiffusor darstellend den berechneten Luftdurchgang ohne Zugluft ermöglicht.

**30.** Schichtelemente nach den Ansprüchen
19 und 20, dadurch gekennzeichnet.
dass sie als Grundlage für anspruchsvolle Wand- und Deckenverkleidungen aus sorgfältigst verarbeiteten mineralischen oder Holzschichtelementen bestehen, welche zur Aufbringung kostbarer Darstellungen, Motiven und Verzierungen angemessene Qualität sichern.

**31.** Schichtelemente nach den Ansprüchen
1 , bis 23, dadurch gekennzeichnet,
dass sie als Jalousien in sorgfältiger Ausführung und Formgebung als doppelwandige leicht durchscheinende Horizontal- bzw. Vertikaljalousien ausgebildet, mit mehreren reflektierenden Sprühaufträgen unter Verwendung von Aluminiumpulver und lokal angepasster Füllung mit Dämmstoffen, z. B. mit Aerogelen oder Glasfaservlies, bzw. anderen durchscheinenden Dämmstoffeinlagen erhalten und mit ihren drehbaren Einzellamellen um bis zu ca. 170° Drehung Wärme von aussen wie von innen durch ihre Formgebung mit stärkerer Biegung der oberen Lamellenhälfte, gegenüber einer geringeren unteren Biegung optimal reflektieren und Vertikaljalousien mit durchgehend gleicher Biegung mit ausreichender seitlicher Überdeckung der einzelnen Lamellen hergestellt und leicht nach vorn und hinten versetzt angeordnet werden, um das Eindringen der Wärmestrahlung weitgehend zu vermeiden und zugleich ausreichenden Lichteinfall zu ermöglichen.

**32.** Schichtelemente nach den Ansprüchen
1 bis 23, dadurch gekennzeichnet,
dass sie in Form einfacher starrer Sicht-Sonnenblenden einfacher Bauweise starre oder mit Seilzug bewegliche Vertikallamellen in einem festen Rahmen abwechselnd vor- und hintereinander leicht versetzt angeordnet werden, deren vordere seitliche Enden eine gedachte Sekante bilden, welche bei höchstem Sonnenstand und rechtwinkliger Einstrahlung eine gedachte Tangente zur weiter hinten angeordneten jeweils nächsten Lamelle bilden, die weiter nach hinten angeordnete Lamelle an ihren seitlichen Enden mit einem Radius von etwa 1/20 im Vergleich zum grösseren Lamellenradius in Richtung Sonneneinstrahlung aufgebogen sind, um bei verändertem Sonnenstand einfallende Wärmestrahlung zu reflektieren, bzw. bei beliebig anderem höchsten Sonnenstand mit ihren gedachten Sekanten und Tangenten parallele Geraden bilden, am oberen wie am unteren Ende in Lamellenhalter mit identisch ausgefräster Lamellenbiegung eingefügt werden, mit Seilzug versehen beweglich sein können, oder starr bei rechtwinkliger Ausrichtung auf den höchsten Sonnenstand von einer Führungsleisten-Abdeckung gehalten werden, wobei die Bauweise das Aufstellen oder Anbringen vor oder hinter Fenster- und Glasflächen und bei Doppelfenstern zwischen beiden Fenstern gestattet.

**33.** Schichtelemente nach den Ansprüchen
1 , bis 23, dadurch gekennzeichnet,
dass sie bei Verwendung in Bädern von Wohnungen, Hotels, Krankenhäusern und anderen Gebäuden zur Verhinderung der hohen Wärmeabsorption gekachelter oder gefliester Wandflächen als Wärmeschutzkombinationen dienen, welche aus Kunststoffolien mit eingeschweissten Einfach- oder Wechsellagen aus üblichen und geeigneten Wärmedämmstoffen in Verbindung mit Reflexfolien eine wirksame Trennung zwischen kalten Wänden und wärmerer Raumluft und menschlichem Körper darstellen, mit vertikal eingelegten Versteifungen versehen, punktverschweisst sein können, mit Saugnäpfen oder Ösen versehen an Kacheln, bzw. Fliesen zeitweilig während der Badbenutzung verwendet, jeweils nach örtlichen Vorgaben gefertigt werden, sich reinigen und aufbewahren lassen, oder als umlaufende Duschvorhänge ausgerüstet in ein- oder mehrfachen Führungen zu öffnen und zu schliessen sind und in ansprechender Farbgebung, bzw. Ausstattung mit ausgewählten Motiven angenehmsten Aufenthalt in Bädern bieten.

34. Schichtelemente nach den Ansprüchen 1, bis 23, dadurch gekennzeichnet, dass sie als Durchströmhypokausten oder Hypokausten zur Wandbeheizung ausgebildet werden, indem sie aus wahlweise schwereren und leichteren Blähmineralien oder anderem rundkörnigem Material oder Gemischen daraus, verhältnismässig grossen Durchmessers bestehend, vermischt hitze-, feuer- und frostsicher verklebt oder vermörtelt zu luftdurchlässigen Tafeln geformt und gehärtet werden, um als Durchströmhypokausten mit Warmluft aus Kachelöfen, Heissluftöfen oder anderen Luftheizgeräten, aber auch zum kühlen mit zugeführter Kaltluft versorgt schnelle Erwärmung/Abkühlung von Räumen bewirken, in sehr vorteilhafter Weise bei Ausstattung einer gegenüberliegenden Wand mit Luftabsaugung jederzeit sehr gutes Innenklima verbreiten können, bzw. als geschlossene Hypokausten mit einer dünnen, gut wärmeleitenden raumseitigen Deckschicht versehen als Teil- oder Vollheizzwand ausgestattet werden kann, die wahlweise mit Luft, Warmwasserheizschlangen, oder mit elektrischer Beheizung bzw. anderweitig für Heiz- und Kühlzwecke ausgerüstet werden kann.

35. Schichtelemente nach den Ansprüchen 1 bis 23, dadurch gekennzeichnet, dass sie in Verkehrsmitteln und Fahrzeugen sich als Diffusoren zur Belüftung bewähren, indem die Luftauslässe trichterförmig ausgebildet werden und den jeweils in den Fahrgastraum gerichteten Luftstrom ohne Volumenverlust und Zugluft abgeben, andere Schichtelemente in Form von Mehrfachwechsellagen aus geprägten Kunststoffschaumfolien und Reflexionsfolien zwischen Innenraumverkleidungen und äusserer Fahrzeughülle von Fahrgasträumen Hitzebelastungen reflektieren und während Standzeiten schnelle Erhitzung, bzw. Auskühlung verhindern, aber auch als Wärme-/Kälteschutz für temperaturanfällige Transportgüter im Gütertransport verwendet werden können.

Fig 1a  Fig 1b  Fig 1c  Fig 1d

Fig 1e  Fig 1f  Fig 1g

Fig 1h  Fig 1 i  Fig 1k

Fig 1l  Fig 1l'  Fig 1l''

Fig 1l'''  Fig 1l

Fig 1m  Fig 1m'

Fig 1n  Fig 1n'  Fig 1n''

Fig 1o  Fig 1o'  Fig 1o''

Fig 1p  Fig 1p'  Fig 1p''  Fig 1q  Fig 1q'

Fig 1r  Fig 1r'  Fig 1r''

12   2r   6p

6q

Fig 1e   6p   12

2f'   2f'''

Fig 1b

2g   12 a

Fig 1q'

2f'

Fig 1e

Fig 1l   Fig 1l''

Fig 1l'''   2f'   6q

Fig 1a   Fig 1c   Fig 1b

12

6o   4   2g

Fig 1o

12   4   6p'

2   2e

Fig 1p   6p'

Fig 1p'   2r

Fig 1m   6p'

2   4

Fig 1p''   2r   12

Fig 1q   2f'   12

Fig 1n   Fig 1n'

2   2   12

Fig 1r

Fig 1r'   Fig 1r''

2g   12   6q

Fig 3a  Fig 3b  Fig 3c  Fig 3d  Fig 3e

Fig 3f  Fig 3g  Fig 3h  Fig 3j  Fig 3k

Fig 3l

Fig 3m

Fig 3n

Fig 3o

Fig 5

Fig 6

Fig 7a

Fig 7b

7b'

4c

Fig 7c

Fig 7d

Fig 7f

Fig 7g

Fig 8

Fig 8a

Fig 8b

Fig 14

Fig 9

Fig 9a

60'

4g

Fig 9b

60

Fig 9b'

60'

4

2g

Fig 9c

4g

Fig 7k

60

Fig 7h

6f

6n

12

18

5

2

2

5

4

Fig 7j

4

3f

5

10'

5

12

2g

4

18

4

9f

6f

12

2g

Fig 11

Fig 11a

Fig 11b

10

11''

2

3

11'

4

1r

11'

4a

4

Fig 11c

4a

11'

Fig 11e

Fig 11e'

4g

4g

Fig 11d

4g

Fig 11f

4a

4i

4g

2f'''

2r'

6.0

4a

2r'

12

2

4g

21'

Fig 13a

10

2

6s

6e

Fig 13b    Fig 13c

10

2j

2'h    4b

Fig 21a

21"    12    2r

Fig 21b

21"

Fig 3p

1p'

Fig 3p'

2a

10    2h    2j    6g

2r

12

Fig 21c    2g

2c'

12

Fig 21d    1l'''

6q

Fig 21e

90°    80°    70°    60°    50°    45°    40°    30°    20°

Fig 21f       Fig 21f'    4a       Fig 21f"

9

4a

Fig 21g

9

4h

12

2h

2h

9

Fig 21h

4h

9

12   2h    9      4h      6q

Fig 21j

EP 0 919 673 A2

Fig 21i
4a
2
Fig 21k'
2
Fig 21k
2c"
4a
2
Fig 21l
Fig 21m 2g 4 6p' 6p 6o 6n'
2b'

Fig 21n
21n'
Fig 21o
21o'
Fig 21p
Fig 21q
Fig 21r

37

Fig 26

4h

2

1

2

6u

2s'

2j'

6v'

2j

4a

Fig 26 a

5  2h  6r  6f'  1  4a  2r  6o

2

6v'

Fig 26 b

12  2r"  6o  5

2j'

Fig 27a

Fig 27b

Fig 28b

2h

6t

1p

2g

2j

3a

4a

4a

4c

28'

5

4c

4

Fig 28a

4h

4c

11e

11d

4

4a

4a

4a

Fig 28c

Fig 28d

3p'

6t

2h

10

11d

4c

4

3d

6v'

5

9

21

3a

3a

11'

3k

11

11e

Fig 29

Fig 30

Fig 31

Fig 15    15c

15d

15d1

4

15e

15d2

15a

15d2

15d1

15d2

15b

4

Fig 18

Fig 17d

Fig 17

Fig 20

Fig 22

Fig 23

Fig 24